(19) Europäisches Patentamt
European Patent Office
Office européen des brevets

(11) **EP 4 629 519 A1**

(12) **EUROPEAN PATENT APPLICATION**
published in accordance with Art. 153(4) EPC

(43) Date of publication:
**08.10.2025 Bulletin 2025/41**

(21) Application number: **22966911.4**

(22) Date of filing: **01.12.2022**

(51) International Patent Classification (IPC):
*H04B 7/04* (2017.01)

(52) Cooperative Patent Classification (CPC):
**H04B 7/04; Y02D 30/70**

(86) International application number:
**PCT/CN2022/135995**

(87) International publication number:
**WO 2024/113322 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **HE, Chuanfeng
Dongguan, Guangdong 523860 (CN)**

(74) Representative: **Penza, Giancarlo
Bugnion S.p.A.
Viale Lancetti, 17
20158 Milano (IT)**

(54) **WIRELESS COMMUNICATION METHOD AND APPARATUS, TERMINAL DEVICE, AND NETWORK DEVICE**

(57) Embodiments of the present application provide a wireless communication method and apparatus, a terminal device, and a network device. The method comprises: a terminal device determines a target receiver for receiving a first signal, wherein the target receiver comprises a main receiver and/or an auxiliary receiver; the first signal is a first-type signal, and the first-type signal is a signal received by the auxiliary receiver on the basis of at least one of the following modes: envelope detection, amplitude detection, frequency detection, and phase detection.

A terminal device determines a target receiver for receiving a first signal, and the target receiver includes a main receiver and/or an auxiliary receiver; the first signal belongs to a first type signal, and the first type signal is a signal received by the auxiliary receiver based on at least one of the following modes: envelope detection, amplitude detection, frequency detection, or phase detection

— 610

**FIG. 6**

EP 4 629 519 A1

**Description**

TECHNICAL FIELD

Embodiments of the present disclosure relate to the technical field of mobile communication, and in particular to a wireless communication method and apparatus, a terminal device, and a network device.

BACKGROUND

In order to reduce power consumption of a terminal device, the terminal device may turn off a main receiver and receive signals with low demodulation complexity through an auxiliary receiver of the terminal device. However, coverage of these signals is poor, and the auxiliary receiver of the terminal device may fail to receive them properly, resulting in communication interruption.

SUMMARY

The embodiments of the present disclosure provide a wireless communication method and apparatus, a terminal device, and a network device.

The embodiments of the present disclosure provide a wireless communication method applied to a terminal device, and the terminal device includes a main receiver and an auxiliary receiver. The method includes the following operation.

A target receiver for receiving a first signal is determined. The target receiver includes the main receiver, and/or the auxiliary receiver; the first signal belongs to a first type signal, and the first type signal is a signal received by the auxiliary receiver based on at least one of the following modes: envelope detection, amplitude detection, frequency detection, or phase detection.

The embodiments of the present disclosure also provide a wireless communication method applied to a network device. The method includes the following operation.

A first signal is transmitted to the terminal device when the terminal device enters a first state. The first signal belongs to a first type signal, and the first type signal is a signal received by an auxiliary receiver based on at least one of the following modes: envelope detection, amplitude detection, frequency detection, or phase detection.

The embodiments of the present disclosure further provide a wireless communication apparatus applied to a terminal device, and the terminal device includes a main receiver and an auxiliary receiver. The wireless communication apparatus includes a first determination unit.

The first determination unit is configured to determine a target receiver for receiving the first signa. The target receiver includes the main receiver, and/or the auxiliary receiver; the first signal belongs to a first type signal, and the first type signal is a signal received by the auxiliary receiver based on at least one of the following modes: envelope detection, amplitude detection, frequency detection, or phase detection.

The embodiments of the present disclosure further provide a wireless communication apparatus applied to a network device. The apparatus includes a second transceiver unit.

The second transceiver unit is configured to transmit a first signal to a terminal device when the terminal device enters the first state. The first signal belongs to a first type signal, and the first type signal is a signal received by an auxiliary receiver based on at least one of the following modes: envelope detection, amplitude detection, frequency detection, or phase detection.

The communication device according to the embodiment of the present disclosure may be the terminal device or the network device described above, and the communication device includes a processor and a memory. The memory is configured to store a computer program, and the processor is configured to invoke and execute the computer program stored in the memory to perform the wireless communication method described above.

The chip according to the embodiment of the present disclosure is configured for implementing the wireless communication method described above.

Specifically, the chip includes a processor. The processor is configured for invoking and executing a computer program from a memory, to enable a device installed with the chip to perform the wireless communication method described above.

The computer-readable storage medium according to the embodiment of the present disclosure is configured to store a computer program. The computer program causes a computer to perform the wireless communication method described above.

The computer program product according to the embodiment of the present disclosure includes computer program instructions that cause a computer to perform the wireless communication method described above.

The computer program according to the embodiment of the present disclosure causes the computer to perform the wireless communication method described above when the computer program is run on the computer.

The embodiments of the present disclosure provide a wireless communication method. A terminal device may determine a target receiver for receiving a first signal, the target receiver includes a main receiver, and/or an auxiliary receiver in the terminal device, and the first signal belongs to a first type signal, the first type signal is a signal received by the auxiliary receiver based on at least one of envelope detection, amplitude detection, frequency detection or phase detection. It may be understood that the first signal may be a signal that can be received by the auxiliary receiver. In order to avoid the problem of poor coverage of the first signal, the terminal device may determine a suitable receiver for the first signal to receive the first signal through the determined receiver, thus ensuring the reliability of the first signal reception and the normal communication.

BRIEF DESCRIPTION OF THE DRAWINGS

The accompanying drawings described herein are intended to provide a further understanding of the present disclosure, and constitute a part of the present disclosure. The schematic embodiments of the present disclosure and the description thereof are intended to explain the present disclosure, and do not constitute an undue limitation to the present disclosure. In the drawings:

FIG. 1 is a schematic diagram of a communication architecture according to an embodiment of the present disclosure.
FIG. 2 is a schematic diagram of an On-Off Keying (OOK) modulation principle according to an embodiment of the present disclosure.
FIG. 3 is a schematic diagram of a Multi-Carrier OOK (MC-OOK) signal according to an embodiment of the present disclosure.
FIG. 4 is a schematic diagram of 256 Quadrature Amplitude Modulation (QAM) modulation constellation points according to an embodiment of the present disclosure.
FIG. 5 is a schematic structural diagram of a receiver system of a terminal device according to an embodiment of the present disclosure.
FIG. 6 is a first schematic flowchart of a wireless communication method according to an embodiment of the present disclosure.
FIG. 7 is a schematic diagram of generating a first signal by multi-carrier modulation according to an embodiment of the present disclosure.
FIG. 8 is a schematic state diagram of a terminal device according to an embodiment of the present disclosure.
FIG. 9 is a signal transmission timing diagram according to an embodiment of the present disclosure.
FIG. 10 is a second schematic flowchart of a wireless communication method according to an embodiment of the present disclosure.
FIG. 11 is a schematic diagram of a structural composition of a wireless communication apparatus 1100 according to an embodiment of the present disclosure.
FIG. 12 is a schematic diagram of a structural composition of a wireless communication apparatus 1200 according to an embodiment of the present disclosure.
FIG. 13 is a schematic structural diagram of a communication device according to an embodiment of the present disclosure.
FIG. 14 is a schematic structural diagram of a chip according to an embodiment of the present disclosure.
FIG. 15 is a schematic block diagram of a communication system according to an embodiment of the present disclosure.

DETAILED DESCRIPTION

The technical solutions in the embodiments of the present disclosure will be described below with reference to the accompanying drawings in the embodiments of the present disclosure. It is apparent that the described embodiments are not all embodiments but only part of embodiments of the present disclosure. All other embodiments obtained by those of ordinary skill in the art on the basis of the embodiments in the present disclosure without creative work shall fall within the scope of protection of the present disclosure.

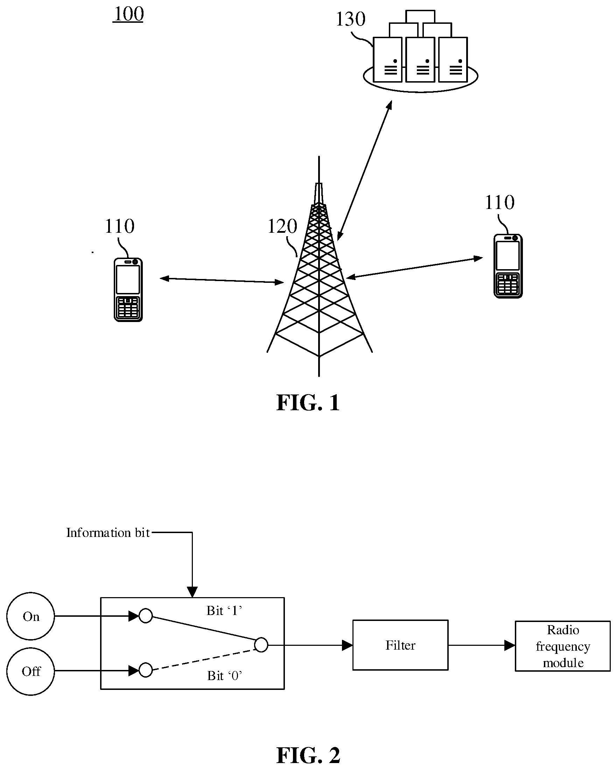

FIG. 1 is a schematic diagram of an application scenario according to an embodiment of the present disclosure.

As illustrated in FIG. 1, the communication system 100 may include a terminal device 110 and a network device 120. The network device 120 may communicate with the terminal device 110 through an air interface. Multi-service transmission is supported between the terminal device 110 and the network device 120.

It should be understood that the embodiments of the present disclosure are described by taking the communication system 100 as an example, which is not limited to the embodiments of the present disclosure. That is, the technical solutions of the embodiments of the present disclosure may be applied to various communication systems, for example, a Long Term Evolution (LTE) system, LTE Time Division Duplex (TDD), a Universal Mobile Telecommunication System (UMTS), an Internet of Things (IoT) system, a Narrow Band IoT (NB-IoT) system, an enhanced Machine-Type Communications (eMTC) system, a 5th Generation communication (5G) system (which refers to a New Radio (NR) communication system), a future communication system or the like.

In the communication system 100 illustrated in FIG. 1, the network device 120 may be an access network device communicated with the terminal device 110. The access network device may provide communication coverage for a specific geographical region and communicate with the terminal device 110 (e.g., a User Equipment (UE)) located in the coverage.

The network device 120 may be an Evolutional Node B (eNB or eNodeB) in the LTE system, a Next Generation Radio Access Network (NG RAN) device, a next generation NodeB (gNB) in the NR system, or a wireless controller in a Cloud Radio Access Network (CRAN). Alternatively, the network device may be a relay station, an access point, a vehicle-mounted device, a wearable device, a hub, a switch, a network bridge, a router, a network device in a future evolved Public Land Mobile Network (PLMN) or the like.

The terminal device 110 may be any terminal device, and includes, but is not limited to, a terminal device connected to the network device 120 or another terminal device via a wired or wireless connection.

For example, the terminal device 110 may be referred to an access terminal, a User Equipment (UE), a subscriber unit, a subscriber station, a mobile station, a mobile radio station, a remote station, a remote terminal, a mobile device, a user terminal, a terminal, a wireless communication device, a user agent or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with a wireless communication function, a computing device or other processing device connected to a wireless modem, a vehicle-mounted device, a wearable device, a terminal device in a 5G network, a terminal device in a future evolved PLMN or the like.

The terminal device 110 may be used for Device to Device (D2D) communication.

The wireless communication system 100 may also include a core network device 130 that communicates with the network device 120. The core network device 130 may be a 5G Core (5GC) device, for example, an Access and Mobility Management Function (AMF), an Authentication Server Function (AUSF), a User Plane Function (UPF), and for another example, a Session Management Function (SMF). In one example, the core network device 130 may also be an Evolved Packet Core (EPC) device in the LTE network, for example, a Session Management Function + Core Packet Gateway (SMF+PGW-C) device. It should be understood that SMF+PGW-C may simultaneously achieves the functions that SMF and PGW-C may perform. During the evolution of the network, the core network device may also be called other names or form a new network entity by dividing the functions of the core network, which is not limited by the embodiments of the present disclosure.

The various functional units in the communication system 100 may also communicate with each other by establishing connections via the next generation network (NG) interface.

For example, the terminal device establishes an air interface connection with the access network device via the NR interface for transmission of user-plane data and control-plane signaling. The terminal device may establish a control-plane signaling connection to the AMF via a NG interface 1 (referred to as N1 for short). The access network device, such as a gNB, may establish a user-plane data connection to the UPF via a NG interface 3 (referred to as N3 for short). The access network device may establish a control-plane signaling connection to the AMF via a NG interface 2 (referred to as N2 for short). The UPF may establish a control-plane signaling connection to the SMF via a NG interface 4 (referred to as N4 for short). The UPF may interact with the data network for user-plane data via a NG interface 6 (referred to as N6 for short). The AMF may establish a control-plane signaling connection to the SMF via a NG interface 11 (referred to as N11 for short). The SMF may establish a control plane signaling connection with the PCF via a NG interface 7 (referred to as N7 for short).

FIG. 1 exemplarily illustrates one network device, one core network device and two terminal devices. In one example, the communication system 100 may include multiple network devices, and another number of terminal devices may be included in coverage of each network device. No limits are made thereto in the embodiments of the present disclosure.

It should be noted that FIG. 1 merely exemplarily illustrates the system to which the present disclosure is applied, and of course, the method in the embodiments of the present disclosure may also be applied to other systems. Terms "system" and "network" in the present disclosure may usually be interchanged in the present disclosure. In the present disclosure, the term "and/or" is only an association relationship describing associated objects and represents that three relationships may exist. For example, A and/or B may represent three conditions: i.e., independent existence of A, existence of both A and B, and independent existence of B. In addition, character "/" in the present disclosure usually represents that previous and next associated objects form an "or" relationship. It is also to be understood that the term "indication" in embodiments of the present disclosure may be a direct indication, an indirect indication, or an indication of an associative relationship. For example, an indication of B by A may indicate that A directly indicates B, for example, B is obtained through A, or that A indirectly indicates B, for example, A indicates C and B is obtained through C, or that there is an association between A and B. It is also to be understood that the term "correspondence" in embodiments of the present disclosure may indicate a direct or indirect correspondence between the two elements, or may indicate an association between the two elements, or may indicate a relationship of indicating and being indicated, configuring and being configured, etc. It is also to be understood that the term "predefined" or "predefined rules" in embodiments of the present disclosure may be achieved by pre-storing corresponding codes, tables or other manners for indicating relevant information in devices (e.g., including a terminal device and a network device). The specific implementation is not limited in the present disclosure. For example, "predefined" may refer to those defined in a protocol. It is also to be understood that in embodiments of the present disclosure, "protocol" may refer to a standard protocol in the field of communication, which may include, for example, a LTE protocol, NR protocol and relevant protocol applied in the future communication system, which is not limited in the present disclosure.

To make the technical solutions of the embodiments of the present disclosure to be understood better, the relevant technology of the embodiments of the present disclosure is described below. The following relevant technology as optional solutions may be combined with the technical solutions of the embodiments in any way, and shall fall within the scope of protection of the present disclosure.

In order to further reduce power consumption of a terminal device, standard discussion release 18 (R18) considers introduction of an auxiliary receiver for the terminal device. The auxiliary receiver has the characteristics of extremely low cost, extremely low complexity and extremely low power consumption, and mainly receives signals through envelope detection or amplitude detection.

A signal received by the auxiliary receiver is different from a signal carried by a Physical Downlink Control Channel (PDCCH) defined by R16 and R17 in terms of the modulation scheme, waveform, or the like. The auxiliary receiver may receiver signals with low demodulation complexity. Exemplarily, the auxiliary receiver may receive an envelope signal that performs Amplitude Shift Keying (ASK) modulation on the carrier signal.

The demodulation of an ASK-modulated signal may be completed by driving a low-power circuit based on energy provided by a wireless radio frequency signal, and thus, the auxiliary receiver may be a passive receiver. In addition, the auxiliary receiver may also be powered by the terminal device. No matter which power supply mode, the auxiliary receiver greatly reduces power consumption compared with the traditional receiver of the terminal device.

In some embodiments, the auxiliary receiver may receive an On-Off Keying (OOK)-modulated signal. FIG. 2 is a schematic diagram of an OOK modulation principle. OOK is also known as binary Amplitude Shift Keying (2ASK). OOK modulation may modulate the amplitude of the carrier to non-zero values and zero values, corresponding to On and Off, respectively. The amplitude of the carrier is modulated to a non-zero value (corresponding to the On component in OOK), which represents a bit with a value of 1 among the information bits. The amplitude of the carrier is modulated to a zero value (corresponding to the Off component in OOK), which represents a bit with a value of 0 among the information bits. Further, the information bits become analog signals after modulation, and the analog signals can be filtered by a filter and sent out through a radio frequency module.

At present, transmitters all adopt a multi-carrier modulation system. In order to maintain good compatibility with the existing multi-carrier modulation system and reduce the complexity introduced by the transmitter in implementing the wake up signal, the OOK signal may be simulated by the existing multi-carrier modulation system, that is, a Multi-Carrier OOK (MC-OOK) signal is generated.

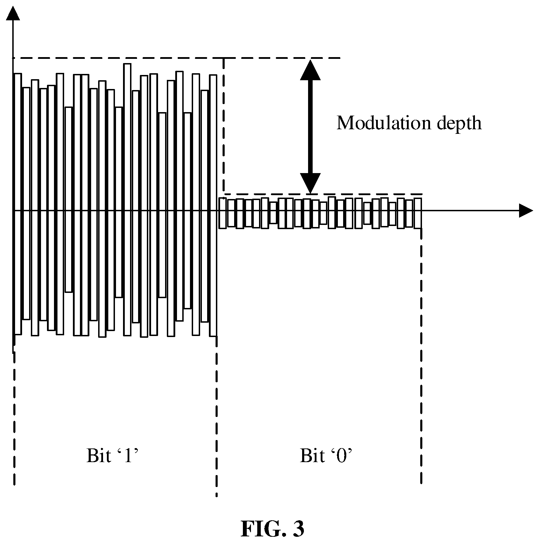

FIG. 3 is a schematic diagram of an MC-OOK signal. In a multi-carrier modulation system, such as an Orthogonal Frequency Division Multiplexing (OFDM) modulation system, each subcarrier may be modulated to a specified amplitude and phase by an existing OFDM transmitter, such that the waveform of a time-domain signal subjected to Inverse Discrete Fourier Transform (IDFT) conversion approximates the waveform formed by OOK modulation, where bit 1 is represented by a high level of the signal and bit 0 is represented by a low level of the signal.

For an OOK signal generated by multi-carriers, amplitudes of the On component and Off component need to be clearly distinguished to achieve a certain modulation depth, so as to facilitate correct demodulation at the receiving terminal. For example, for an MC-OOK signal in Wireless Fidelity (WiFi) technology, the ratio of the average power of the On component and the Off component needs to be at least 20 dB.

Based on this, when the transmitting terminal generates the On component of the OOK signal, the amplitude of the corresponding time-domain signal modulated by the subcarrier carrying the On component meets the requirement of modulation depth, and the amplitude of the time-domain signal is as flat as possible. Correspondingly, when the Off component is generated, the amplitude value of the corresponding time-domain signal modulated by the subcarrier carrying the Off component is lower than the amplitude value corresponding to the On component, so as to meet the requirement of modulation depth. Taking 256 Quadrature Amplitude Modulation (QAM) as an example, the transmitter can map different constellation points on subcarriers to meet the above requirements.

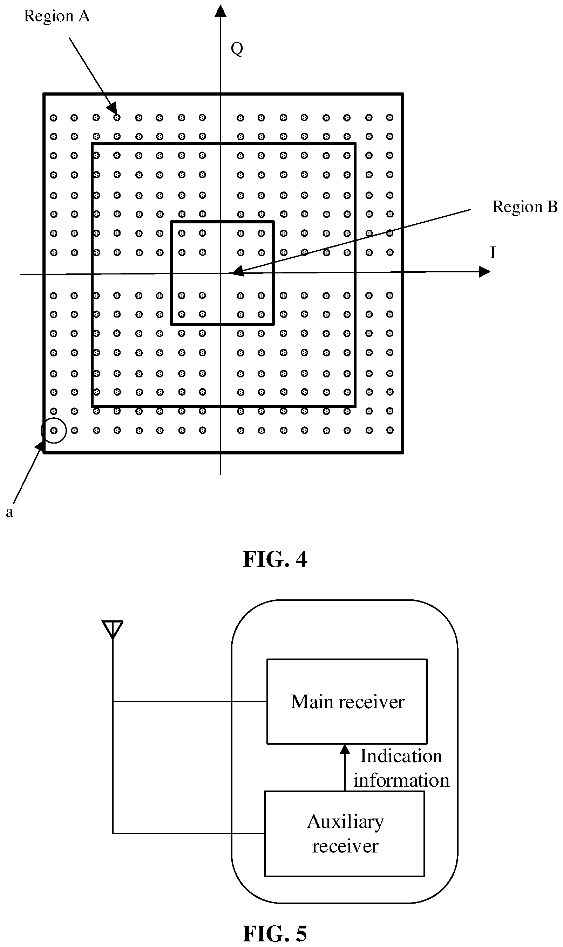

Referring to FIG. 4, the transmitter may map constellation points of larger amplitudes (e.g., constellation points in region A in FIG. 5) to subcarriers to generate the On component of the OOK signal, and map constellation points of smaller amplitudes (e.g., constellation points in region B in FIG. 5) to subcarriers to generate the Off component of the OOK signal.

In addition, for the Off component, the corresponding subcarrier may be set as a null subcarrier. That is, in symbols where the Off component is located, the modulation symbol mapped by the corresponding subcarrier only needs to ensure that the time-domain waveform satisfies the low level, and even no modulation symbol is mapped on these carriers.

Referring to the schematic structural diagram of a receiver system of a terminal device illustrated in FIG. 5, the main receiver and the auxiliary receiver in the terminal device share a set of radio frequency antennas. Under certain conditions, the terminal device may turn off the main receiver and receive signals with low demodulation complexity through the auxiliary receiver to realize communication with the network. If the network device requires the terminal device to turn on the main receiver, the network device may send indication information to the auxiliary receiver through the above signal to instruct the terminal device to turn on the main receiver. Specifically, after receiving the indication information indicating to turn on the main receiver, the auxiliary receiver may send wake up information to the main receiver to instruct the main receiver to turn on.

Exemplarily, the auxiliary receiver may be a Wake Up Receiver (WUR), the WUR may receive a Wake Up Signal (WUS). The WUS may wake up the main receiver in the terminal device. If the WUS instructs the terminal device to turn on the main receiver, the auxiliary receiver may send wake up information to the main receiver to instruct the main receiver to turn on. Otherwise, the main receiver is in the off state.

It should be understood that since the auxiliary receiver has extremely low power consumption, the auxiliary receiver may not need to be turned on and off as the main receiver to save power, but may be kept on continuously to receive signals with lower demodulation complexity. However, these signals have poor coverage, and the auxiliary receiver may not receive them properly, resulting in communication interruption. In particular, in a scenario in which the auxiliary receiver receives a WUS, the terminal device can only receive the WUS within the coverage range of the WUS, and when the coverage range of the WUS is poor, the terminal device may be unable to receive the WUS properly, thereby failing to wake up the main receiver, resulting in communication interruption.

Based on the above problems, the embodiments of the present disclosure provide a wireless communication method. A terminal device may determine a target receiver for receiving a first signal, the target receiver includes a main receiver and/or an auxiliary receiver in the terminal device, the first signal belongs to a first type signal, and the first type signal is a signal received by the auxiliary receiver based on at least one of the following modes: envelope detection, amplitude detection, frequency detection or phase detection. It is to be understood that the first signal may be a signal that can be received by the auxiliary receiver, and in order to avoid the problem of poor coverage of the first signal, the terminal device may determine a suitable receiver for the first signal to receive the first signal through the determined receiver, thus ensuring the reliability of reception of the first signal and the normal operation of communication.

In order to facilitate understanding of the technical solutions of the embodiments of the present disclosure, the technical solutions of the present disclosure will be described in detail below with reference to specific examples. The above relevant technology as optional solutions may be combined with the technical solutions of the embodiments in any way, and shall fall within the scope of protection of the embodiments of the present disclosure. The embodiments of the present disclosure include at least part of the following contents.

An embodiment of the present disclosure provides a wireless communication method, which can be applied to the terminal device mentioned in the above embodiments. Referring to FIG. 5, the terminal device in the embodiment of the present disclosure may include a main receiver and an auxiliary receiver.

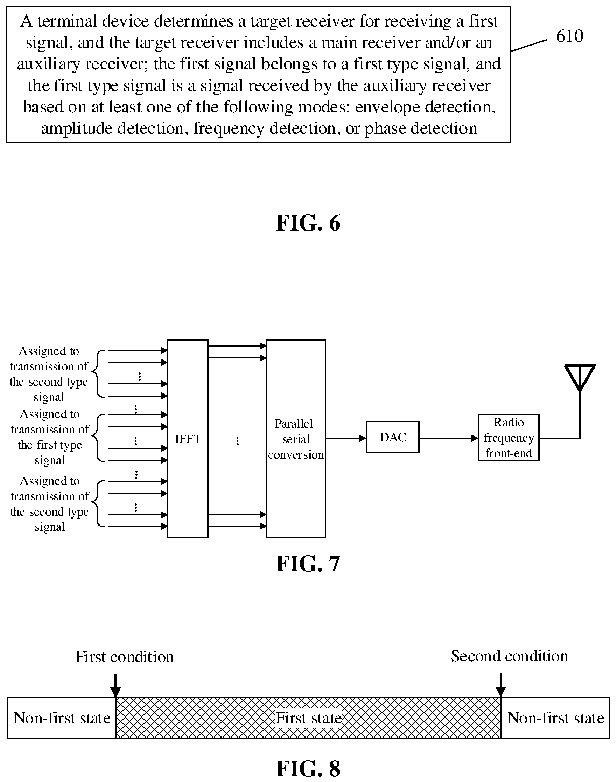

Referring to FIG. 6, the wireless communication method according to the embodiment of the present disclosure may include the following operation.

At 610, a terminal device determines a target receiver for receiving a first signal, and the target receiver includes a main receiver and/or an auxiliary receiver. The first signal belongs to a first type signal, and the first type signal is a signal received by the auxiliary receiver based on at least one of the following modes: envelope detection, amplitude detection, frequency detection, or phase detection.

In the embodiment of the present disclosure, the auxiliary receiver of the terminal device may be used to receive the first type signal, and the main receiver may be used to receive the first type signal and/or the second type signal.

The first type signal and the second type signal are different types of wireless air interface signals. The modulation scheme and/or waveform of the first type signal and the second type signal are different. The first type signal may be a signal modulated by a modulation scheme such as ASK, OOK, Frequency Shift Keying (FSK) modulation, a Phase Shift Keying (PSK) modulation or the like, and the second type signal may be a signal modulated by a modulation scheme such as multi-carrier modulation, OFDM modulation or the like. Further, the waveform of the first type signal may be a waveform formed through modulation by ASK, OOK, FSK, or the like. The waveform of the second type signal may be a waveform formed by OFDM or multi-carrier modulation.

It should be noted that the first type signal obtained by ASK, OOK, FSK, PSK and other modulation schemes can be received by the auxiliary receiver having low complexity and low power consumption. For the second type signal obtained by OFDM, multi-carrier modulation and other modulation schemes, the receiver needs to detect modulation symbols on each subcarrier, thus the second type signal needs to be received by the main receiver with high complexity and high power consumption.

It is to be noted that the main receiver can also receive the first type signal obtained by modulation schemes such as ASK, OOK, FSK, PSK, etc. That is, the first type signal may be received by the main receiver and/or the auxiliary receiver, and the second type signal may be received by the main receiver.

In the embodiment of the present disclosure, the first signal in 610 belongs to the first type signal. That is, the first signal is also a signal modulated by modulation schemes such as ASK, OOK, FSK, PSK, etc.

In an embodiment, the first signal may be the first type signal carrying control information and/or data information.

It should be understood that the terminal device may interact with the network device for control information and/or data information through the first signal. In practical applications, in order to reduce power consumption of the terminal device, the terminal device may turn off the main receiver and receive the first signal through the auxiliary receiver to communicate with the network device. When the coverage of the first signal is poor, the auxiliary receiver may not receive the first signal normally.

Based on this, before receiving the first signal or in the process of receiving the first signal, the terminal device in the embodiment of the present disclosure may determine a suitable receiver from the main receiver and the auxiliary receiver to receive the first signal. Specifically, the terminal device may determine to receive the first signal by the main receiver, or determine to receive the first signal by the auxiliary receiver, or determine to receive the first signal by the main receiver and the auxiliary receiver.

That is, before receiving the first signal or in the process of receiving the first signal, the terminal device may determine whether the first signal can be reliably received by the auxiliary receiver. When it is determined that the auxiliary receiver can reliably receive the first signal, the terminal device may only turn on the auxiliary receiver to receive the first signal. When it is determined that the auxiliary receiver cannot reliably receive the first signal, the terminal device may receive the first signal through the main receiver or jointly receive the first signal through the main receiver and the auxiliary receiver. That is, the terminal device can determine a suitable receiver to receive the first signal, ensuring the reliability of reception of the first signal and avoiding communication interruption.

FIG. 7 illustrates a schematic diagram of generating a first type signal by multi-carrier modulation. The first type signal may be multiplexed in-band with the second type signal (e.g., an NR signal) in the system. Specifically, the transmitter may map the first signal and other air interface signals to different subcarriers, convert the frequency-domain signal to the time-domain through Inverse Fast Fourier Transform (IFFT), and then perform parallel-serial conversion and digital-to-analog converter (DAC), finally reach the radio frequency front-end, and transmit the first type signal and the second type signal through the antenna. In this way, the first type signal is generated in the multi-carrier modulation system. In practical applications, the network device may obtain the first type signal in the manner illustrated in FIG. 7, and send the first type signal to the terminal device. Correspondingly, the terminal device may receive the first type signal by envelope detection, amplitude detection, frequency detection, phase detection, or the like.

In some embodiments, the first type signal may include, in addition to the first signal, one or more of the following signals: a first synchronization signal, a first reference signal, a first preamble signal and a first beacon signal.

The first type signal as a new air interface signal may include the first synchronization signal for time synchronization between the terminal device and the network device, the first reference signal for operations such as channel estimation, channel quality measurement, positioning, phase tracking, etc., the first preamble signal for access of the terminal device, the first beacon signal for identifying a transmitting device, etc.

It should be understood that the terminal device may measure the above signals and determine the coverage of the first type signal according to the measurement parameters.

In an embodiment, the first type signal may be a WUR signal. The WUR signal may be a new wireless air interface signal different from existing wireless air interface signals such as NR, LTE, and WiFi.

The WUR signal is generated by modulation schemes such as ASK, OOK, FSK, PSK, etc. In an embodiment, the WUR signal may be generated by an independent transmitter or may be generated using a transmitter based on multi-carrier modulation.

In an embodiment, the first signal may be a signal carrying control information and/or data information in the WUR signal, for example, the first signal may be the WUS. The network device may wake up the main receiver of the terminal device through the WUS.

In some embodiments, the category of the second type signal may be one or more of the following: a NR signal, an LTE wireless signal and a WiFi signal.

In an embodiment, the second type signal may include one or more of the following signals: a second synchronization signal, a second reference signal, a second preamble signal and a second beacon signal.

It can be understood that the second synchronization signal may include a synchronization signal in NR, LTE, or WiFi, for example, a Synchronization Signal and PBCH block (SSB) in NR, a primary synchronization signal and a secondary synchronization signal in LTE, and the like, which are not limited by the embodiments of the present disclosure. The second reference signal may include a reference signal in NR, LTE, or WiFi, for example, a Cell-specific Reference Signal (CRS), a positioning reference signal, a phase tracking reference signal, and the like, which are not limited by the embodiments of the present disclosure. The second preamble signal may include a preamble signal in NR, LTE, or WiFi for access between the terminal device and the network device, or access between the terminal device and the access point/router. The second beacon signal may include a beacon signal in NR, LTE, or WiFi.

The method for determining the target receiver by the terminal device is described below in detail.

In an embodiment of the present disclosure, the target receiver may be determined based on at least one measurement parameter of the first type signal and/or at least one measurement parameter of the second type signal.

In one possible embodiment, the terminal device may measure the first type signal and/or the second type signal, and obtain measurement parameters of the first type signal and/or measurement parameters of the second type signal respectively. Furthermore, the terminal device may determine, based on the measurement parameters of the first type signal and/or the measurement parameters of the second type signal, a receiver in the terminal device by which the first signal is received.

It should be noted that the terminal device may measure one or more of the first synchronization signal, the first reference signal, the first preamble signal and the first beacon signal in the first type signal to obtain the measurement parameters of the first type signal. The terminal device may measure the first signal in the first type signal to obtain the measurement parameters of the first type signal. Similarly, the terminal device may measure one or more of the second synchronization signal, the second reference signal, the second preamble signal and the second beacon signal in the second type signal to obtain the measurement parameters of the second type signal.

In an embodiment, the above measurement parameters may include signal received power, signal received quality, Signal-to-Noise Ratio (SNR), and other parameters, which are not limited by the embodiments of the present disclosure.

It should be understood that the terminal device may determine the coverage of the first type signal according to the above measurement parameters of the first type signal and/or the second type signal, so as to determine/estimate the reception quality of the first signal.

In some embodiments, the terminal device may directly measure the first type signal, and directly determine the coverage of the first type signal according to the measurement parameters of the first type signal. Exemplarily, if the signal received power, the signal received quality and the SNR of the first type signal are larger, the reception quality of the first signal is better, and conversely, if the signal received power, the signal received quality and the SNR of the first type signal are smaller, or the first type signal is not detected, the reception quality of the first signal is worse.

In some embodiments, the terminal device may measure the second type signal, and indirectly determine the coverage of the first type signal according to the measurement parameters of the second type signal. It should be understood that the radio frequency environment in which the network side transmits the first type signal and the second type signal is the same to a certain extent, and thus, the terminal device can indirectly determine the coverage of the first type signal by using the measurement parameters of the second type signal. Exemplarily, the larger the signal received power, the signal received quality and the SNR of the second type signal, it indicates indirectly that the reception quality of the first signal is better, and conversely, the smaller the signal received power, the signal received quality and the SNR of the second type signal, or the second type signal is not detected, it indicates indirectly that the reception quality of the first signal is worse.

In some embodiments, the terminal device may simultaneously measure the first type signal and the second type signal to obtain the measurement parameters of the first type signal and the measurement parameters of the second type signal. The coverage of the first type signal is determined based on the measurement parameters of the two different types of signals.

Based on the above embodiments, in an embodiment of the present disclosure, the terminal device may determine the target receiver according to the following rules.

When at least one measurement parameter of the first type signal is greater than or equal to the first threshold, and/or at least one measurement parameter of the second type signal is greater than or equal to the second threshold, the terminal device determines that the target receiver is the auxiliary receiver.

When the at least one measurement parameter of the first type signal is less than the first threshold, and/or the at least one measurement parameter of the second type signal is less than the second threshold, the terminal device determines that the target receiver is the main receiver, or determines that the target receiver is the main receiver and the auxiliary receiver.

In a scenario in which the terminal device only measures the first type signal, the terminal device may determine that the coverage of the first type signal is better when one or more measurement parameters of the first type signal are greater than or equal to the first threshold, and thus determine to receive the first signal by the auxiliary receiver to reduce power consumption of the terminal device. When one or more measurement parameters of the first type signal are less than the first threshold, the terminal device may determine that the coverage of the first type signal is poor. Therefore, in order to ensure normal communication, the terminal device determines to receive the first signal through the main receiver, or determines to simultaneously receive the first signal through the main receiver and the auxiliary receiver, to enable, so as to improve the reception reliability of the first signal.

In a scenario in which the terminal device only measures the second type signal, the terminal device may indirectly determine that the coverage of the first type signal is better when one or more measurement parameters of the second type signal are greater than or equal to the second threshold, and thus determine to receive the first signal by the auxiliary receiver to reduce power consumption of the terminal device. When one or more measurement parameters of the second type signal are less than the second threshold, the terminal device may determine that the coverage of the first type signal is poor, and therefore, in order to ensure normal communication, the terminal device determines to receive the first signal through the main receiver, or determines to simultaneously receive the first signal through the main receiver and the auxiliary receiver, so as to improve the reception reliability of the first signal.

When the terminal device simultaneously measures the first type signal and the second type signal, the terminal device may determine to receive the first signal by the auxiliary receiver when one or more measurement parameters of the first type signal are greater than or equal to the first threshold and one or more measurement parameters of the second type signal are greater than or equal to the second threshold. When one or more measurement parameters of the first type signal are less than the first threshold, and/or one or more measurement parameters of the second type signal are less than the second threshold, the terminal device determines to receive the first signal by the main receiver, or by the main receiver and the auxiliary receiver, so as to improve the reception reliability of the first signal.

Exemplarily, in a case that the terminal device only turns on the auxiliary receiver, the terminal device may measure only the first type signal, and determine a receiver that receives the first signal according to a relationship between measurement parameters of the first type signal and a first threshold. When the terminal device turns on the main receiver without turning on the auxiliary receiver, or simultaneously turns on the main receiver and the auxiliary receiver, the terminal device may measure the first type signal and/or the second type signal (e.g., an NR signal), and determine the receiver receiving the first signal based on the measurement parameters of the first type signal and/or the measurement parameters of the second type signal.

It should be noted that the measurement parameters of the first type signal being less than the first threshold may include the case that the terminal device does not detect the first type signal. Similarly, the measurement parameters of the second type signal being less than the second threshold may include the case that the terminal device does not detect the second type signal.

Exemplarily, in a case that the terminal device only turns on the auxiliary receiver, if the terminal device does not detect the first type signal twice consecutively within a period of time, the terminal device may determine that the coverage of the current first type signal is poor, and the terminal device may determine to receive the first signal using the main receiver. Further, the terminal device may turn on the main receiver and switch from the auxiliary receiver to the main receiver for communication. In a case that the terminal device only turns on the main receiver, if the terminal device does not detect the first type signal twice accumulatively within a period of time, the terminal device determines to continue to use the main receiver to receive the first signal.

It should also be noted that the first threshold and/or the second threshold in the above embodiments may be configured by a network or may be specified by a protocol, which are not limited by the embodiments of the present disclosure. The first threshold and the second threshold may be the same or different, which are not limited by the embodiments of the present disclosure.

In another possible implementation, the terminal device may determine a target receiver for receiving the first signal based on a plurality of measurement parameters of the first type signal and/or a plurality of measurement parameters of the second type signal.

It should be understood that since the movement of the terminal device causes a change in the channel environment or the radio frequency environment, the terminal device may determine the target receiver for receiving the first signal based on a plurality of measurement results of the first type signal and the second type signal.

It should be noted that the terminal device may measure periodic signals in the first type signal and the second type signal to obtain a plurality of corresponding measurement parameters. For example, the terminal device may measure periodic signals, such as a first synchronization signal, a first reference signal, a first preamble signal and a first beacon signal, in the first type signal to obtain a plurality of measurement parameters of the first type signal. The terminal device may measure periodic signals, such as a second synchronization signal, a second reference signal, a second preamble signal and a second beacon signal, in the second type signal to obtain a plurality of measurement parameters of the second type signal.

In an embodiment, when the number of measurement parameters of the first type signal greater than or equal to the first threshold in the first time period is greater than or equal to the first number, and/or the number of measurement parameters of the second type signal greater than or equal to the second threshold in the second time period is greater than or equal to the second number, the terminal device determines that the target receiver for receiving the first signal is the auxiliary receiver.

When the number of measurement parameters of the first type signal greater than or equal to the first threshold in the first time period is less than the first number, and/or the number of measurement parameters of the second type signal greater than or equal to the second threshold in the second time period is less than the second number, the terminal device determines that the target receiver for receiving the first signal is the main receiver, or the main receiver and the auxiliary receiver.

Alternatively, when the number of measurement parameters of the first type signal less than the first threshold in the first time period is greater than or equal to the third number, and/or the number of measurement parameters of the second type signal less than the second threshold in the second time period is greater than or equal to the fourth number, the terminal device determines that the target receiver for receiving the first signal is the main receiver, or the main receiver and the auxiliary receiver.

When the number of measurement parameters of the first type signal less than the first threshold in the first time period is less than the third number, and/or the number of measurement parameters of the second type signal less than the second threshold in the second time period is less than the fourth number, the terminal device determines that the target receiver for receiving the first signal is the auxiliary receiver.

Specifically, in a scenario in which the terminal device only measures the first type signal, if the number of measurement parameters of the first type signal greater than or equal to the first threshold in the first time period is greater than the first number, the terminal device may determine that the coverage of the first type signal is good and stable, and in this case, the terminal device may determine to receive the first signal using the auxiliary receiver, thereby reducing power consumption of the terminal device. If the number of measurement parameters of the first type signal greater than or equal to the first threshold in the first time period is less than the first number, the terminal device may determine that the coverage of the first type signal is poor or unstable, and in this case, the terminal device may determine to receive the first signal using the main receiver, or the main receiver and the auxiliary receiver, thereby ensuring the reception reliability of the first signal.

It should be noted that the number of measurement parameters of the first type signal greater than or equal to the first threshold in the first time period being greater than the first number may include the following two cases: the cumulative number of measurement parameters of the first type signal greater than or equal to the first threshold in the first time period is greater than the first number; and, the number of measurement parameters of the first type signal continuously greater than or equal to the first threshold in the first time period is greater than the first number.

Further, in a scenario in which the terminal device only measures the first type signal, if the number of measurement parameters of the first type signal less than the first threshold in the first time period is greater than the third number, the terminal device may determine that the coverage of the first type signal is poor, and in this case, the terminal device may determine to receive the first signal using the main receiver, or the main receiver and the auxiliary receive, thereby ensuring the reception reliability of the first signal. If the number of measurement parameters of the first type signal less than the first threshold in the first time period is less than or equal to the third number, the terminal device may determine that the coverage of the first type signal is good and stable. In this case, the terminal device may determine to receive the first signal using the auxiliary receiver, thereby reducing power consumption of the terminal device.

It should be noted that the measurement parameters of the first type signal being less than the first threshold may also include the case that the terminal device does not detect the first type signal.

It should also be noted that the number of measurement parameters of the first type signal less than the first threshold in the first time period being greater than the third number may include the following two cases: the cumulative number of measurement parameters of the first type signal less than the first threshold in the first time period is less than the third number; and, the number of measurement parameters of the first type signal continuously less than the first threshold in the first time period is less than the third number.

In other embodiments, in a scenario in which the terminal device only measures the second type signal, if the number of measurement parameters of the second type signal greater than or equal to the second threshold in the second time period is greater than the second number, the terminal device may indirectly determine that the coverage of the first type signal is good and stable, and in this case, the terminal device may determine to receive the first signal using the auxiliary receiver, thereby reducing power consumption of the terminal device. If the number of measurement parameters of the second type signal greater than or equal to the second threshold in the second time period is less than the second number, the terminal device may indirectly determine that the coverage of the first type signal is poor. In this case, the terminal device may determine to receive the first signal using the main receiver, or the main receiver and the auxiliary receiver, thereby ensuring the reception reliability of the first signal.

It should be noted that the number of measurement parameters of the second type signal greater than or equal to the second threshold in the second time period being greater than the second number may include the following two cases: the cumulative number of measurement parameters of the second type signal greater than or equal to the second threshold in the second time period is greater than the second number; or the number of measurement parameters of the second type signal continuously greater than or equal to the first threshold in the second time period is greater than the first number.

Further, in a scenario in which the terminal device only measures the second type signal, if the number of measurement parameters of the second type signal less than the second threshold in the second time period is greater than the fourth number, the terminal device may indirectly determine that the coverage of the first type signal is poor, and in this case, the terminal device may determine to receive the first signal using the main receiver, or the main receiver and the auxiliary receiver, thereby ensuring the reception reliability of the first signal. If the number of measurement parameters of the second type signal less than the second threshold in the second time period is less than or equal to the fourth number, the terminal device may indirectly determine that the coverage of the first type signal is good and stable, and in this case, the terminal device may determine to receive the first signal using the auxiliary receiver, thereby reducing power consumption of the terminal device.

It should be noted that the measurement parameters of the second type signal being less than the second threshold may also include the case that the terminal device does not detect the first type signal.

It should also be noted that the number of measurement parameters of the second type signal less than the second threshold in the second time period being greater than the fourth number may include the following two cases: the cumulative number of measurement parameters of the second type signal less than the second threshold in the second time period is less than the fourth number; and, the number of measurement parameters of the second type signal continuously less than the second threshold in the second time period is less than the fourth number.

In other embodiments, when the terminal device simultaneously measures the first type signal and the second type signal, the terminal device may determine the target receiver as the auxiliary receiver when the number of measurement parameters of the first type signal greater than or equal to the first threshold in the first time period is greater than the first number, and the number of measurement parameters of the second type signal greater than or equal to the second threshold in the second time period is greater than the second number. When the number of measurement parameters of the first type signal greater than or equal to the first threshold in the first time period is less than or equal to the first number, and/or the number of measurement parameters of the second type signal greater than or equal to the second threshold in the second time period is less than or equal to the second number, the terminal device determines that the target receiver is the main receiver, or the main receiver and the auxiliary receiver.

Alternatively, when the number of measurement parameters of the first type signal greater than or equal to the first threshold in the first time period is greater than the first number, and/or the number of measurement parameters of the second type signal greater than or equal to the second threshold in the second time period is greater than the second number, the terminal device may determine that the target receiver is the auxiliary receiver. When the number of measurement parameters of the first type signal greater than or equal to the first threshold in the first time period is less than or equal to the first number, and the number of measurement parameters of the second type signal greater than or equal to the second threshold in the second time period is less than or equal to the second number, the terminal device determines that the target receiver is the main receiver, or the main receiver and the auxiliary receiver.

Alternatively, when the number of measurement parameters of the first type signal less than the first threshold in the first time period is greater than the third number, and the number of measurement parameters of the second type signal less than the second threshold in the second time period is greater than the fourth number, the terminal device may determine that the target receiver is the main receiver, or the main receiver and the auxiliary receiver. When the number of measurement parameters of the first type signal less than the first threshold in the first time period is less than or equal to the third number, and/or the number of measurement parameters of the second type signal less than the second threshold in the second time period is less than or equal to the fourth number, the terminal device determines that the target receiver is the auxiliary receiver.

Alternatively, when the number of measurement parameters of the first type signal less than the first threshold in the first time period is greater than the third number, and/or the number of measurement parameters of the second type signal less than the second threshold in the second time period is greater than the fourth number, the terminal device may determine that the target receiver is the main receiver, or the main receiver and the auxiliary receiver. When the number of measurement parameters of the first type signal less than the first threshold in the first time period is less than or equal to the third number, and the number of measurement parameters of the second type signal less than the second threshold in the second time period is less than or equal to the fourth number, the terminal device determines that the target receiver is the auxiliary receiver.

It should be noted that the first time period and/or the second time period may be configured by the network or predefined by a protocol. The first time period and the second time period may be the same or different, which are not limited by the embodiments of the present disclosure. Similarly, the first number to the fourth number may be configured by the network or may be predefined by a protocol, which are not limited by the embodiments of the present disclosure.

In an embodiment of the present disclosure, the measurement parameters of the first type signal may be obtained by the terminal device through measuring the first type signal using the main receiver, or obtained by the terminal device through measuring the first type signal using the auxiliary receiver, which are not limited by the embodiments of the present disclosure. Correspondingly, the measurement parameters of the first type signal include a first measurement parameter(s) and/or a second measurement parameter(s). The first measurement parameter is obtained based on measurement of the first type signal by the main receiver of the terminal device, and the second measurement parameter is obtained based on measurement of the first type signal by the auxiliary receiver of the terminal device.

Correspondingly, the first threshold related to the measurement parameters of the first type signal in the above embodiments may include a first sub-threshold and a second sub-threshold. The terminal device may determine the coverage of the first type signal according to the relationship between the first measurement parameter and the first sub-threshold and the relationship between the second measurement parameter and the second sub-threshold, thereby determining the target receiver for receiving the first signal.

It should be noted that the first sub-threshold and the second sub-threshold may be configured by a network or may be specified by a protocol, which are not limited by the embodiments of the present disclosure. In addition, the first sub-threshold and the second sub-threshold may be the same or different, which are not limited by the embodiments of the present disclosure. When the first sub-threshold and the second sub-threshold are the same, the network may configure only the first threshold.

In the embodiments of the present disclosure, since the second type signal is received by the main receiver, the measurement parameters of the second type signal may include a third measurement parameter(s). The third measurement parameter is obtained based on measurement of the second type signal by the main receiver of the terminal device.

It should be understood that if the terminal device only turns on the main receiver, the terminal device may determine the target receiver for receiving the first signal according to the first measurement parameter(s) and the third measurement parameter(s). Exemplarily, if the first measurement parameter is greater than or equal to the first sub-threshold and the third measurement parameter is greater than or equal to the second threshold, the terminal device may determine to receive the first signal using the auxiliary receiver. If the first measurement parameter is less than the first sub-threshold, and/or the third measurement parameter is less than the second threshold, the terminal device may determine to receive the first signal using the main receiver, or using the main receiver and the auxiliary receiver.

If the terminal device only turns on the auxiliary receiver, the terminal device may determine the target receiver for receiving the first signal based on the second measurement parameter(s). Exemplarily, if the second measurement parameter is greater than or equal to the second sub-threshold, the terminal device may determine to receive the first signal using the auxiliary receiver. If the second measurement parameter is less than the second sub-threshold, the terminal device may determine to receive the first signal using the main receiver, or using the main receiver and the auxiliary receiver.

If the terminal device turns on the main receiver and the auxiliary receiver simultaneously, the terminal device may determine the target receiver for receiving the first signal according to the above three-types measurement parameters. Exemplarily, if the first measurement parameter is greater than or equal to the first sub-threshold, the second measurement parameter is greater than or equal to the second sub-threshold, and the third measurement parameter is greater than or equal to the second threshold, the terminal device may determine to receive the first signal using the auxiliary receiver. If any one of the following conditions is satisfied: the first measurement parameter being less than the first sub-threshold, the second measurement parameter being less than the second sub-threshold, and the third measurement parameter being less than the second threshold, the terminal device determines to use the main receiver, or the main receiver and the auxiliary receiver to receive the first signal.

The terminal device may further determine the target receiver for receiving the first signal according to a plurality of first measurement parameters, a plurality of second measurement parameters and a plurality of third measurement parameters.

In an embodiment of the present disclosure, the terminal device may measure a periodic signal (such as a synchronization signal, a reference signal, a beacon signal, etc.) in the first type signal through the main receiver to obtain a plurality of first measurement parameters. The terminal device may measure the periodic signal in the first type signal through the auxiliary receiver to obtain a plurality of second measurement parameters. In addition, the terminal device may measure a periodic signal (such as SSB, CRS, etc.) in the second type signal through the main receiver to obtain a plurality of third measurement parameters.

Exemplarily, if the terminal device only turns on the auxiliary receiver, the terminal device may determine that the target receiver for receiving the first signal is the auxiliary receiver when the number of the first measurement parameters greater than or equal to the first sub-threshold in the first time period is greater than or equal to the first number. When the number of the first measurement parameters greater than or equal to the first subthreshold in the first time period is less than the first number, the terminal device determines that the target receiver for receiving the first signal is the master receiver. If the terminal device only turns on the main receiver, the terminal device may determine that the target receiver for receiving the first signal is the auxiliary receiver when the number of the third measurement parameters greater than or equal to the second threshold in the second time period is greater than or equal to the second number. When the number of the third measurement parameters greater than or equal to the second threshold in the second time period is less than the second number, the terminal device determines that the target receiver for receiving the first signal is the master receiver. The terminal device determines the target receiver based on the plurality of measurement parameters in the same manner as in the above embodiments, and for the sake of simplicity, no examples will be made here.

The terminal device can directly or indirectly determine the coverage of the first type signal according to the measurement results of the first type signal and/or the second type signal, so as to actively select a suitable receiver to receive the first signal. In this way, the reception reliability of the first signal is ensured.

In the embodiments of the present disclosure, the first signal is not always transmitted, and the terminal device may receive the first signal sent by the network device in the first state. It can be understood that the first state refers to a state in which the network device transmits the first signal to the terminal device.

It should be noted that in the first state, the network device defaults that the main receiver of the terminal device turns off, and the first signal is received only through the auxiliary receiver. Therefore, the network device does not directly transmit the second type signal carrying control information and/or data information to the terminal device in the first state. Exemplarily, the network device does not transmit NR signals such as a PDCCH or a Physical Downlink Shared CHannel (PDSCH).

However, in the first state, it may be determined according to the method provided in the above embodiments whether the terminal device actually receives the first signal through the main receiver, receives the first signal through the auxiliary receiver, or simultaneously receives the first signal through the main receiver and the auxiliary receiver.

In the first state, the terminal device may receive the first type signal through the main receiver and/or the auxiliary receiver. That is, in the first state, the main receiver and/or the auxiliary receiver of the terminal device only receive the signal by means of envelope detection, amplitude detection, frequency detection, phase detection, or the like. In the first state, the main receiver and/or the auxiliary receiver of the terminal device may not receive or not demodulate the second type signal.

It should be noted that at present, transmitters all adopt a multi-carrier modulation system. In order to maintain good compatibility with the existing multi-carrier modulation system and reduce the complexity introduced by the transmitter in implementing the wake up signal, a transmitter of the network device may simulate and generate the ASK-modulated first signal by an existing multi-carrier modulation system. Specifically, the transmitter can map modulation symbols onto a part of subcarriers, and these modulation symbols select target constellation points under the modulation mode in the multi-carrier modulation system, to generate an approximate ASK signal in time-domain. It can be understood that the multi-carrier transmitter of the network device may select constellation points in the specific region (such as constellation points in the region A and the region B illustrated in FIG. 4) and map them to part of subcarriers to obtain the first signal. In this way, the waveform of the first signal in time-domain is similar to the waveform of the ASK signal. Based on this, the auxiliary receiver of the terminal device may detect the first signal according to a detection method such as envelope detection, amplitude detection, frequency detection, a phase detection or the like. Thus, the function of transmitting the first signal by the multi-carrier transmitter is realized.

In addition, when the first signal is transmitted in the multi-carrier modulation scheme, the main receiver of the terminal device has the ability to demodulate the multi-carrier modulated signal, and can demodulate mapped symbols on each subcarrier in the first signal, thereby demodulating the ASK-modulated first signal. In this way, the main receiver of the terminal device can realize the reception of the first signal. Exemplarily, the network device may map modulation symbols, which are constellation points (1, 1, 1, 1, 1, 1, 1, 1) under 256QAM modulation, onto a subcarrier in a set of subcarriers to generate a high level in the ASK modulated signal.

The formula for modulation symbols under 256QAM is as follows:

$$d(i) = \frac{1}{\sqrt{170}}\left\{\left(1-2b(8i)\right)\left[8-\left(1-2b(8i+2)\right)\left[4-\left(1-2b(8i+4)\right)\left[2-\left(1-2b(8i+6)\right)\right]\right]\right]\right.$$
$$\left. + j\left(1-2b(8i+1)\right)\left[8-\left(1-2b(8i+3)\right)\left[4-\left(1-2b(8i+5)\right)\left[2-\left(1-2b(8i+7)\right)\right]\right]\right]\right\}$$

$d(i)$ represents a value of a constellation point. $b(*)$ represents a value of each bit in the data signal. When each bit in the data signal takes a value of 1, that is $b(8i),b(8i+1),b(8i+2),b(8i+3),b(8i+4),b(8i+5),b(8i+6),b(8i+7) =(1,1,1,1,1,1,1,1)$, $d(i)$ is the constellation point a in FIG. 4.

The transmitter of the network device may map the above known modulation symbols on the subcarrier carrying the first signal, and correspondingly, the main receiver of the terminal device may demodulate the modulation symbols to identify the first signal. Taking OOK modulation as an example, the transmitter may generate both On components and Off components by mapping known modulation symbols on subcarriers. In this way, the main receiver of the terminal device can demodulate the modulation symbols and thus detect the first signal.

In some embodiments, the terminal device and the network device may determine whether to enter the first state according to the same rule. Referring to FIG. 8, the terminal device and the network device may determine whether the first condition is satisfied, and determine to enter the first state when the first condition is satisfied. Further, in the first state, when the second condition is satisfied, it is determined to exit the first state.

The first condition may include one or more of the following.

The terminal device transmits first indication information to the network device, and the first indication information indicates that the target receiver for receiving the first signal is the auxiliary receiver.

The terminal device receives second indication information sent by the network device, and the second indication information is used to indicate to turn off the main receiver.

A duration between the current time and the time when the scheduling information was last received is equal to a first duration.

In the embodiment of the present disclosure, the terminal device may determine the target receiver according to the method described in the above embodiments. After the target receiver is determined, the terminal device may report the determined target receiver to the network device. Specifically, before entering the first state, the terminal device may measure the first type signal and/or the second type signal, and determine the target receiver for receiving the first signal according to the measurement result of the first type signal and/or the measurement result of the second type signal (for example, the first measurement parameter(s) to the third measurement parameter(s)). After determining the target receiver, the terminal device may transmit the first indication information to the network device, to inform the network device by the first indication information of which receiver the terminal device uses to receive the first signal.

It should be noted that the first indication information may explicitly indicate the target receiver, for example, the first indication information may carry an identifier of the determined receiver. When the first indication information takes a first value, it indicates that the target receiver is the main receiver, when the first indication information takes a second value, it indicates that the target receiver is the auxiliary receiver, and when the first indication information takes a third value, it indicates that the target receiver is the main receiver and the auxiliary receiver. The first indication information may also implicitly indicate the target receiver, for example, the first indication information may carry the measurement parameters of the first type signal and/or the measurement parameters of the second type signal. The embodiments of the present disclosure do not limit the indication mode of the first indication information.

When the terminal device determines that the target receiver is the auxiliary receiver, that is, the terminal device determines that the measurement parameters of the first type signal are less than the first threshold, and/or the measurement parameters of the second type signal are less than the second threshold, the terminal device may turn off the main receiver and communicate with the network device through the auxiliary receiver. Otherwise, when the terminal device determines that the target receiver is the main receiver, or the main receiver and the auxiliary receivers, the terminal device may keep the main receiver turn on.

In a possible implementation, when the first indication information indicates that the target receiver for receiving the first signal is the auxiliary receiver, the terminal device and the network device may determine to enter the first state.

In another possible implementation, the network device may transmit the second indication information to the terminal device, and instruct the terminal device to turn off the main receiver by the second indication information. Under this condition, the network device and the terminal device may determine to enter the first state. Exemplarily, when the network device subsequently has no uplink/downlink scheduling transmission for the terminal device, the network device may send the second indication information to the terminal device to instruct the terminal device to turn off the main receiver, thereby reducing power consumption.

In another possible implementation, the terminal device and the network device may perform no signaling interaction, and the terminal device and the network device may determine to enter the first state when determining that there is no uplink/downlink scheduling transmission in the first duration. Exemplarily, the terminal device and the network device may set a timer, and the timer starts when there is no uplink/downlink scheduling transmission for the terminal device by the network device. If the network device does not have any uplink/downlink scheduling transmission for the terminal device during the operation of the timer, the terminal device and the network device determine to enter the first state when the timer expires. If the network device schedules the terminal device to perform uplink or downlink transmission during the operation of the timer, the timer is reset.

It should be understood that by determining whether to enter the first state using a timer, the overhead of control signaling between the network device and the terminal device can be reduced.

In some embodiments, the terminal device and the network device may determine to exit the first state when a second condition is satisfied. The second condition may comprise at least one of the following.

The terminal device transmits third indication information to the network device, and the third indication information is used to indicate that the first state has been exited.

The network device transmits fourth indication information to the terminal device, and the fourth indication information is used to indicate the terminal device to turn on the main receiver.

When the terminal device is in the first state, if the terminal device determines that measurement parameters of the first signal are less than the third threshold, the terminal device transmits the third indication information to the network device through the main receiver, and indicates that the terminal device exits the first state through the third indication information.

It should be understood that in the first state, the terminal device may also continuously perform measurement, and determine the condition of the current first type signal according to the measurement result. It should be noted that the network device does not directly transmit the second type signal to the terminal device in the first state. Therefore, in the first state, the terminal device may measure the first type signal, and determine the coverage of the first type signal in real time according to the measurement parameters (including the first measurement parameter and/or the second measurement parameter) of the first type signal.

In a possible implementation, in a case that the coverage of the first type signal is poor, for example, the measurement parameters of the first type signal are less than the third threshold, the terminal device may transmit the third indication information to the network device through the main receiver to indicate that the terminal device exits the first state. The terminal device communicates with the network device via the main receiver, thus avoiding the communication interruption.

It should be noted that the third threshold may be different from the first threshold and the second threshold in the above embodiments, and the third threshold may be less than the first threshold. The third threshold may be configured by the network, may be specified by a protocol, or may be set by the terminal device itself, which is not limited by the embodiments of the present disclosure. The terminal device may set the third threshold according to the minimum requirements of communication transmission.

In another possible implementation, the network device may actively transmit the fourth indication information to the terminal device according to actual requirements, instructing the terminal device to turn on the main receiver and exit the first state. Specifically, the network device may transmit the fourth indication information to the terminal device before scheduling the terminal device to perform uplink/downlink transmission.

Exemplarily, the first state may be a WUS ON state. In the WUS ON state, the network device may transmit a WUS to the terminal device, and wake up the main receiver of the terminal device through the WUS. After receiving the WUS, the terminal device may exit the WUS ON state and enter the WUS Off state.

On the basis of the above embodiments, in the embodiments of the present disclosure, the terminal device may determine the target receiver for receiving the first signal before entering the first state. In this way, the terminal device may receive the first signal using the determined target receiver when entering the first state.

Furthermore, in the first state, the receiver for receiving the first signal is not fixed and changeable. It is understood that in the first state, the terminal device may also determine the target receiver in real time to receive the first signal based on the determined target receiver.

In the first state, the main receiver and/or the auxiliary receiver of the terminal device only receive a signal by means of envelope detection, amplitude detection, frequency detection, phase detection, or the like. Therefore, in the first state, the terminal device can measure only the first type signal. The target receiver is determined based on the measurement result of the first type signal.

In an example, in the first state, when the terminal device receives the first signal through the main receiver, the terminal device may measure the first type signal by the main receiver to obtain the first measurement parameter(s). The terminal device may determine whether to use the auxiliary receiver to receive the first signal according to the first measurement parameters. If the first measurement parameters are greater than or equal to a threshold, the terminal device determines to receive the first signal using the auxiliary receiver. When the first measurement parameters are less than the threshold, the terminal device continues to use the main receiver to detect the first signal.

In the first state, when the terminal device receives the first signal through the main receiver, the terminal device may turn on the auxiliary receiver at the same time to measure the first signal to obtain the second measurement parameter(s). If the second measurement parameters are greater than or equal to a threshold, it is determined that the first signal is received by the auxiliary receiver, and the main receiver is turned off to save power. Otherwise, it is necessary to continue to receive the first signal through the main receiver.

In the first state, when the terminal device receives the first signal through the auxiliary receiver, the terminal device may obtain the second measurement parameters by measuring the first type signal through the auxiliary receiver. If the second measurement parameters are greater than or equal to a threshold, the terminal device continues to receive the first signal using the auxiliary receiver. Otherwise, it is necessary to switch to the main receiver and receive the first signal through the main receiver, so as to avoid communication interruption.

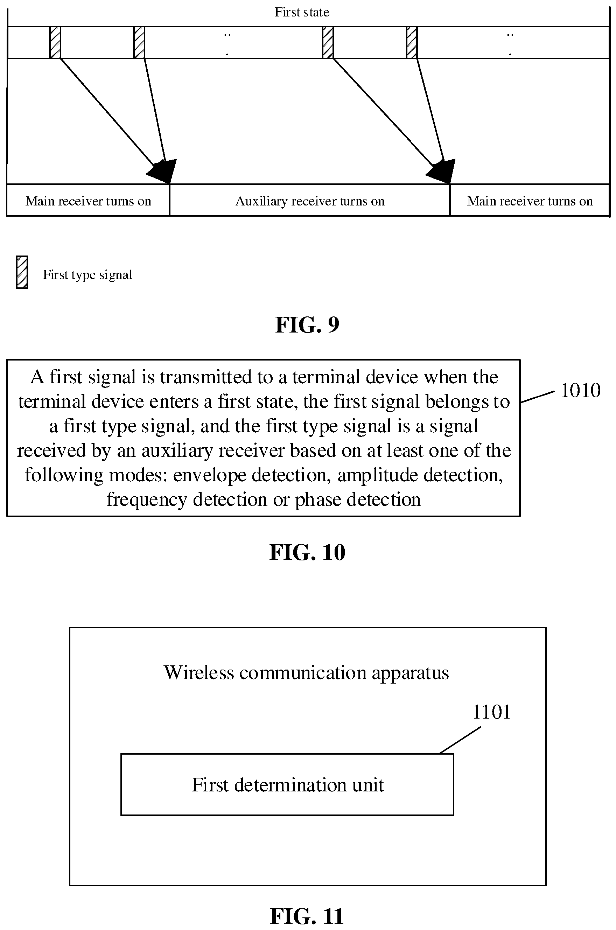

In another example, in the first state, the terminal device may determine the target receiver for receiving the first signal according to the plurality of measurement results. Referring to FIG. 9, in the first state, during receiving the first signal using the main receiver, when measurement parameters (i.e., the first measurement parameters in the above embodiment) of two consecutive first-type signals are greater than or equal to a threshold, the terminal device switches to the auxiliary receiver to receive the first signal. Otherwise, the current main receiver continues to receive the first signal. In addition, during receiving the first signal using the auxiliary receiver, when measurement parameters (i.e., the second measurement parameters in the above embodiment) of two consecutive first-type signals are less than a threshold, or no first-type signal is detected twice consecutively, the terminal device switches to receive the first signal by the main receiver. Otherwise, the current auxiliary receiver continues to receive the first signal.

In the wireless communication method according to the embodiments of the present disclosure, the terminal device may determine a suitable receiver to receive the first signal, thereby ensuring the reception reliability of the first signal and avoiding communication interruption.

Based on the same inventive concept as the above embodiments, an embodiment of the present disclosure further provides a wireless communication method, which is applied to a network device. Referring to FIG. 10, the wireless communication method according to the embodiment of the present disclosure may include the following operation.

At 1010, a network device transmits a first signal to a terminal device when the terminal device enters a first state, the first signal belongs to a first type signal, and the first type signal is a signal received by an auxiliary receiver based on at least one of the following modes: envelope detection, amplitude detection, frequency detection or phase detection.

In the embodiment of the present disclosure, the network device does not continuously transmit the first signal. The network device may transmit the first signal to the terminal device in the first state.

It should be noted that in the first state, the network device defaults that the main receiver of the terminal device turns off, and the first signal is received only through the auxiliary receiver. That is, when the terminal device is in the first state, the target receiver for receiving the first signal in the terminal device is determined to be the auxiliary receiver.

Therefore, the network device does not directly transmit the second type signal carrying control information and/or data information to the terminal device in the first state. Exemplarily, the network device does not transmit NR signals such as a PDCCH or a Physical Downlink Shared CHannel (PDSCH).

However, in the first state, it may be determined according to the method provided in the above embodiments whether the terminal device actually receives the first signal through the main receiver, receives the first signal through the auxiliary receiver, or simultaneously receives the first signal through the main receiver and the auxiliary receiver.

It should be noted that at present, transmitters all adopt a multi-carrier modulation system. In order to maintain good compatibility with the existing multi-carrier modulation system and reduce the complexity introduced by the transmitter in implementing the wake up signal, taking ASK modulation as an example, a transmitter of the network device may simulate and generate the ASK-modulated first signal by an existing multi-carrier modulation system. Specifically, the transmitter may map modulation symbols onto a part of subcarriers, and these modulation symbols select target constellation points under the modulation mode in the multi-carrier modulation system, to generate an approximate ASK signal in time-domain. It can be understood that the multi-carrier transmitter of the network device may select constellation points in the specific region (such as constellation points in the region A and the region B illustrated in FIG. 4) and map them to part of subcarriers to obtain the first signal. In this way, the waveform of the first signal in time-domain is similar to the waveform of the ASK signal. Based on this, the auxiliary receiver of the terminal device may detect the first signal according to a detection method such as envelope detection, amplitude detection, frequency detection, a phase detection or the like. Thus, transmission of the first signal by the multi-carrier transmitter is realized.

It can be understood that the transmitter of the network device may map the above known modulation symbols on the subcarrier carrying the first signal, and correspondingly, the main receiver of the terminal device may demodulate the modulation symbols to identify the first signal. Taking OOK modulation as an example, the transmitter may generate both On components and Off components by mapping known modulation symbols on subcarriers. In this way, the main receiver of the terminal device can demodulate the modulation symbols and thus detect the first signal.

In an embodiment of the present disclosure, the network device may transmit the first type signal and/or the second type signal. The first type signal and/or the second type signal are used for the terminal device to determine a target receiver that receives the first signal, and the target receiver includes a main receiver and/or an auxiliary receiver of the terminal device.

The first type signal and the second type signal are different types of wireless air interface signals. The modulation scheme and/or waveform of the first type signal and the second type signal are different. The first type signal may be a signal modulated by a modulation scheme such as ASK, OOK, FSK, PSK or the like, and the second type signal may be a signal modulated by a modulation scheme such as multi-carrier modulation, OFDM modulation or the like. Further, the waveform of the first type signal may be a waveform formed through modulation by ASK, OOK, FSK, PSK or the like. The waveform of the second type signal may be a waveform formed by OFDM or multi-carrier modulation.

It should be noted that the first type signal obtained by ASK, OOK, FSK and other modulation schemes can be received by the auxiliary receiver having low complexity and low power consumption. For the second type signal obtained by OFDM, multi-carrier modulation and other modulation schemes, the receiver needs to detect modulation symbols on each subcarrier, thus the second type signal needs to be received by the main receiver with high complexity and high power consumption.

It is to be noted that the main receiver can also receive the first type signal obtained by ASK, OOK, FSK and other modulation schemes. That is, the first type signal may be received by the main receiver and/or the auxiliary receiver, and the second type signal may be received by the main receiver.

In the embodiment of the present disclosure, the first signal in 1010 belongs to the first type signal, that is, the first signal may be a signal modulated by modulation schemes such as ASK, OOK, FSK, PSK, etc.

In an embodiment, the first signal may be the first type signal carrying control information and/or data information.

In some embodiments, the first type signal may include, in addition to the first signal, one or more of the following signals: a first synchronization signal, a first reference signal, a first preamble signal, and a first beacon signal.

The first type signal as a new air interface signal may include the first synchronization signal for time synchronization between the terminal device and the network device, the first reference signal for operations such as channel estimation, channel quality measurement, positioning, phase tracking, etc., the first preamble signal for access of the terminal device, the first beacon signal for identifying a transmitting device, etc.

It should be understood that the terminal device may measure the above signals and determine the coverage of the first type signal according to the measurement parameters.

In an embodiment, the first type signal may be a WUR signal. The WUR signal may be a new wireless air interface signal different from existing wireless air interface signals such as NR, LTE, and WiFi.

The WUR signal is generated by modulation schemes such as ASK, OOK, FSK, PSK, etc. In an embodiment, the WUR signal may be generated by an independent transmitter or may be generated using a transmitter based on multi-carrier modulation.

In an embodiment, the first signal may be a signal carrying control information and/or data information in the WUR signal, for example, the first signal may be the WUS. The network device may wake up the main receiver of the terminal device through the WUS.

In some embodiments, the category of the second type signal may be one or more of the following: NR signal, LTE wireless signal and WiFi signal.

In an embodiment, the second type signal may include one or more of the following signals: a second synchronization signal, a second reference signal, a second preamble signal and a second beacon signal.

It can be understood that the second synchronization signal may include a synchronization signal in NR, LTE, or WiFi, for example, a Synchronization Signal and PBCH block (SSB) in NR, a primary synchronization signal and a secondary synchronization signal in LTE, and the like, which are not limited by the embodiments of the present disclosure. The second reference signal may include a reference signal in NR, LTE, or WiFi, for example, a Cell-specific Reference Signal (CRS), a positioning reference signal, a phase tracking reference signal, and the like, which are not limited by the embodiments of the present disclosure. The second preamble signal may include a preamble signal in NR, LTE, or WiFi for access between the terminal device and the network device, or access between the terminal device and the access point/router. The second beacon signal may include a beacon signal in NR, LTE, or WiFi.

In an embodiment of the present disclosure, the terminal device may determine the target receiver for receiving the first signal based on measurement parameters of the first type signal and/or the second type signal. It should be noted that the method in which the terminal device determines the target receiver is the same as that described in the above embodiments, and will not be repeatedly described here for brevity.

In an embodiment of the present disclosure, the terminal device and the network device may determine whether to enter the first state according to the same rule. Referring to FIG. 8, the terminal device and the network device may determine whether the first condition is satisfied, and when the first condition is satisfied, the terminal device and the network device determine to enter the first state. Further, in the first state, when the second condition is satisfied, the terminal device and the network device may exit the first state.

The first condition may include one or more of the following.

The first indication information transmitted by the terminal device indicates that the terminal device receives the first signal through the auxiliary receiver.

The second indication information is transmitted to the terminal device, and the second indication information is used to indicate to turn off the main receiver.

A duration between the current time and the time when scheduling information was last transmitted to the terminal device is equal to a first duration.

It can be understood that the terminal device may measure the first type signal and/or the second type signal before entering the first state, and determine the target receiver for receiving the first signal according to the measurement result of the first type signal and/or the measurement result of the second type signal (for example, the first measurement parameter(s) to the third measurement parameter(s)). After determining the target receiver, the terminal device may transmit the first indication information to the network device, to inform the network device by the first indication information of which receiver the terminal device uses to receive the first signal.

It should be noted that the first indication information may explicitly indicate the target receiver, for example, the first indication information may carry an identifier of the determined receiver. When the first indication information takes a first value, it indicates that the target receiver is the main receiver, when the first indication information takes a second value, it indicates that the target receiver is the auxiliary receiver, and when the first indication information takes a third value, it indicates that the target receiver is the main receiver and the auxiliary receiver. The first indication information may also implicitly indicate the target receiver, for example, the first indication information may carry the measurement parameters of the first type signal and/or the measurement parameters of the second type signal. The embodiments of the present disclosure do not limit the indication mode of the first indication information.

When the terminal device determines that the target receiver is the auxiliary receiver, that is, the terminal device determines that the measurement parameters of the first type signal are less than the first threshold, and/or that the measurement parameters of the second type signal are less than the second threshold, the terminal device may turn off the main receiver and communicate with the network device through the auxiliary receiver. Otherwise, when the terminal device determines that the target receiver is the main receiver, or the main receiver and the auxiliary receivers, the terminal device may keep the main receiver turn on.

In a possible implementation, when the first indication information indicates that the target receiver for receiving the first signal is the auxiliary receiver, the terminal device and the network device may determine to enter the first state.

In another possible implementation, the network device may transmit the second indication information to the terminal device, and instruct the terminal device to turn off the main receiver by the second indication information. Under this condition, the network device and the terminal device may determine to enter the first state. Exemplarily, when the network device subsequently has no uplink/downlink scheduling transmission for the terminal device, the network device may send the second indication information to the terminal device to instruct the terminal device to turn off the main receiver, thereby reducing power consumption.

In another possible implementation, the terminal device and the network device may perform no signaling interaction, and the terminal device and the network device may determine to enter the first state when determining that there is no uplink/downlink scheduling transmission in the first duration. Exemplarily, the terminal device and the network device may set a timer, and the timer starts when there is no uplink/downlink scheduling transmission for the terminal device by the network device. If the network device does not have any uplink/downlink scheduling transmission for the terminal device during the operation of the timer, the terminal device and the network device determine to enter the first state when the timer expires. If the network device schedules the terminal device to perform uplink or downlink transmission during the operation of the timer, the timer is reset.

It should be understood that by determining whether to enter the first state using a timer, the overhead of control signaling between the network device and the terminal device can be reduced.

In some embodiments, the network device and the terminal device may determine to exit the first state when a second condition is satisfied. The second condition may comprise at least one of the following.

The network device receives third indication information transmitted by the terminal device, and the third indication information is used to indicate that the terminal device exits the first state.

The network device transmits fourth indication information to the terminal device, and the fourth indication information is used to indicate the terminal device to turn on the main receiver.

When the terminal device is in the first state, if the terminal device determines that measurement parameters of the first signal are less than the third threshold, the terminal device transmits the third indication information to the network device through the main receiver, and indicates that the terminal device exits the first state through the third indication information.

It should be understood that in the first state, the terminal device may also continuously perform measurement, and determine the condition of the current first type signal according to the measurement result. It should be noted that the network device does not directly transmit the second type signal to the terminal device in the first state. Therefore, in the first state, the terminal device may measure the first type signal, and determine the coverage of the first type signal in real time according to the measurement parameters (including the first measurement parameter and/or the second measurement parameter) of the first type signal.

In a possible implementation, in a case that the coverage of the first type signal is poor, for example, the measurement parameters of the first type signal are less than a third threshold, the terminal device may transmit the third indication information to the network device through the main receiver to indicate that the terminal device exits the first state. The terminal device communicates with the network device via the main receiver, thus avoiding the communication interruption.

It should be noted that the third threshold may be different from the first threshold and the second threshold in the above embodiments, and the third threshold may be less than the first threshold. The third threshold may be configured by the network, may be specified by a protocol, or may be set by the terminal device itself, which are not limited by the embodiments of the present disclosure. The terminal device may set the third threshold according to the minimum requirements of communication transmission.

In another possible implementation, the network device may actively transmit the fourth indication information to the terminal device according to actual requirements, instructing the terminal device to turn on the main receiver and exit the first state. Specifically, the network device may transmit the fourth indication information to the terminal device before scheduling the terminal device to perform uplink/downlink transmission.

Exemplarily, the first state may be a WUS ON state. In the WUS ON state, the network device may transmit the WUS to the terminal device, and wake up the main receiver of the terminal device through the WUS. After receiving the WUS, the terminal device may exit the WUS ON state and enter the WUS Off state.

In the embodiments of the present disclosure, after the network device and the terminal device determine to exit the first state, the network device may consider that the terminal device has turned on the main receiver. Therefore, after exiting the first state, the network device may communicate with the terminal device through the second type signal.

The preferred embodiments of the present disclosure have been described in detail above with reference to the accompanying drawings, but the present disclosure is not limited to the specific details in the above embodiments. Within the scope of the technical concept of the present disclosure, various simple modifications may be made to the technical solutions of the present disclosure, and these simple modifications all fall within the scope of protection of the present disclosure. For example, various specific technical features described in the above specific embodiments may be combined in any suitable manner without contradiction, and various possible combinations will not be described separately in the present disclosure in order to avoid unnecessary repetition. For another example, various different embodiments of the present disclosure may be combined arbitrarily as long as the combination does not depart from the idea of the present disclosure, and the combination should also be regarded as the contents of the present disclosure. For another example, various embodiments and/or technical features of the various embodiments in the present disclosure may be combined with the related art in any manner without conflict, and the resulting technical solutions shall also fall within the scope of protection of the present disclosure.

It should also be understood that in various method embodiments of the present disclosure, a magnitude of a sequence number of each process does not mean an execution sequence and the execution sequence of each process should be determined by its function and an internal logic and should not form any limit to an implementation process of the embodiments of the present disclosure. Furthermore, in the embodiments of the present disclosure, the terms "downlink", "uplink" and "sidelink" are used to indicate a direction of transmission of signals or data, "downlink" is used to indicate that the signal or data is transmitted in a first direction from a station to user equipment (UE) of a cell, "uplink" is used to indicate that the signal or data is transmitted in a second direction from UE of a cell to a station, and "sidelink" is used to indicate that the signal or data is transmitted in a third direction from UE 1 to UE 2. For example, "downlink signal" indicates that the signal is transmitted in the first direction. Further, in the embodiments of the present disclosure, the term "and/or" is only an association relationship describing associated objects and represents that three relationships may exist. Specifically, A and/or B may represent three conditions: i.e., independent existence of A, existence of both A and B, and independent existence of B. In addition, character "/" in the present disclosure usually represents that previous and next associated objects form an "or" relationship.

FIG. 11 is a schematic diagram of a structural composition of a wireless communication apparatus 1100 according to an embodiment of the present disclosure, which is applied to a terminal device. As illustrated in FIG. 11, the wireless communication apparatus includes a first determination unit 1101.

The first determination unit 1101 is configured to determine a target receiver for receiving a first signal. The target receiver includes a main receiver, and/or an auxiliary receiver. The first signal belongs to a first type signal, and the first type signal is a signal received by the auxiliary receiver based on at least one of the following modes: envelope detection, amplitude detection, frequency detection or phase detection.

In some embodiments, the target receiver is determined based on at least one measurement parameter of the first type signal and/or at least one measurement parameter of the second type signal. The first type signal is received by the main receiver and/or the auxiliary receiver, and the second type signal is received by the main receiver.

In some embodiments, the at least one measurement parameter of the first type signal includes one or more of a first measurement parameter and a second measurement parameter.

The first measurement parameter is obtained based on measurement of the first type signal by the main receiver of the terminal device.

The second measurement parameter is obtained based on measurement of the first type signal by the auxiliary receiver of the terminal device.

In some embodiments, the at least one measurement parameter of the second type signal includes a third measurement parameter, and the third measurement parameter is obtained based on measurement of the second type signal by the main receiver of the terminal device.

In some embodiments, the first type signal further comprises one or more of the following signals: a first synchronization signal, a first reference signal, a first preamble signal and a first beacon signal.

In some embodiments, the first signal is the first type signal carrying control information and/or data information.

In some embodiments, the first type signal is a WUR signal.

In some embodiments, the first signal is a WUS.

In some embodiments, the second type signal is one or more of the following types: NR signal, LTE wireless signal and WiFi signal, the second type signal includes one or more of the following signals: a second synchronization signal, a second reference signal, a second preamble signal, and a second beacon signal.

In some embodiments, when the at least one measurement parameter of the first type signal is greater than or equal to a first threshold, and/or the at least one measurement parameter of the second type signal is greater than or equal to a second threshold, the target receiver is the auxiliary receiver.

When the at least one measurement parameter of the first type signal is less than the first threshold, and/or when the at least one measurement parameter of the second type signal is less than the second threshold, the target receiver is the main receiver, or the target receiver is the main receiver and the auxiliary receiver.

In some embodiments, the target receiver is determined by the terminal device based on a plurality of measurement parameters of the first type signal, and/or based on a plurality of measurement parameters of the second type signal.

In some embodiments, when the number of measurement parameters of the first type signal greater than or equal to a first threshold in a first time period is greater than or equal to a first number, and/or the number of measurement parameters of the second type signal greater than or equal to a second threshold in a second time period is greater than or equal to a second number, the target receiver is the auxiliary receiver.

When the number of measurement parameters of the first type signal greater than or equal to the first threshold in the first time period is less than the first number, and/or the number of measurement parameters of the second type signal greater than or equal to the second threshold in the second time period is less than the second number, the target receiver is the main receiver, or the target receiver is the main receiver and the auxiliary receiver.

In some embodiments, the first determination unit 1101 is further configured to determine the target receiver for receiving the first signal before the terminal device enters the first state. The first state is a state in which the network device transmits the first signal to the terminal device.

In some embodiments, the wireless communication apparatus 1100 further includes a first transceiver unit configured to transmit first indication information to the network device. The first indication information is used to indicate the target receiver.

In some embodiments, when the terminal device determines that the target receiver for receiving the first signal is the auxiliary receiver, the terminal device turns off the main receiver.

In some embodiments, the first transceiver unit is further configured to receive the first signal through the target receiver when the terminal device is in the first state.

In some embodiments, the terminal device enters the first state when a first condition is met. The first condition includes one or more of the following.

First indication information transmitted by the terminal device to the network device indicates that the target receiver is the auxiliary receiver.

The terminal device receives second indication information sent by the network device, and the second indication information is used to indicate to turn off the main receiver.

A duration between the current time and the time when scheduling information was last received is equal to a first duration.

In some embodiments, the first determination unit 1101 is further configured to determine the target receiver for receiving the first signal when the terminal device is in a first state, and the first state is a state in which the network device transmits the first signal to the terminal device.

In some embodiments, the first transceiver unit is further configured to, when the terminal device is in the first state and the terminal device determines that at least one measurement parameter of the first signal is less than the third threshold, transmit third indication information to the network device through the main receiver. The third indication information is used to indicate to exit the first state, and the third threshold is less than the first threshold and/or the second threshold.

Those skilled in the art should understand that the related description of the above wireless communication apparatus according to the embodiment of the present disclosure can be understood with reference to the related description of the wireless communication method according to the embodiments of the present disclosure.

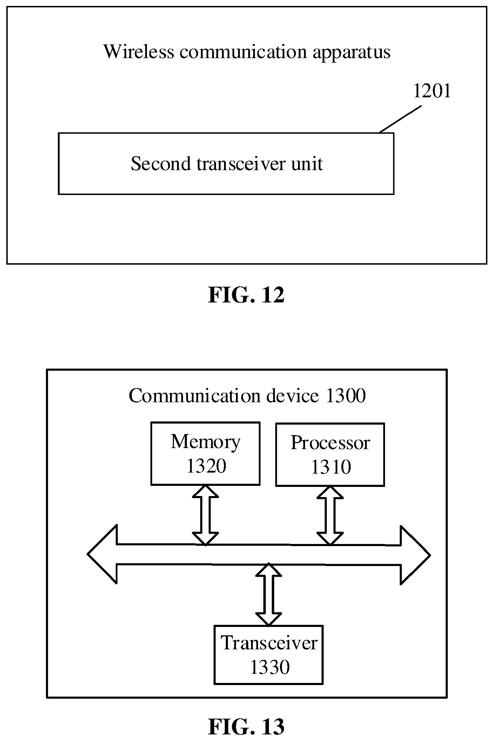

FIG. 12 is a schematic diagram of a structural composition of a communication processing apparatus 1200 according to an embodiment of the present disclosure, and is applied to a network device. As illustrated in FIG. 12, the wireless communication apparatus 1200 includes a second transceiver unit 1201.

The second transceiver unit 1201 is configured to transmit a first signal to a terminal device when the terminal device enters a first state. The first signal belongs to a first type signal, and the first type signal is a signal received by an auxiliary receiver based on at least one of the following modes: envelope detection, amplitude detection, frequency detection or phase detection.

In some embodiments, the network device transmits a first type signal and/or a second type signal, and the first type signal and/or the second type signal are used by the terminal device to determine the target receiver that receives the first signal, and the target receiver includes a main receiver, and/or the auxiliary receiver of the terminal device.

In some embodiments, the first type signal further includes one or more of the following signals: a first synchronization signal, a first reference signal, a first preamble signal and a first beacon signal.

In some embodiments, the first signal is the first type signal carrying control information and/or data information.

In some embodiments, the first type signal is a WUR signal.

In some embodiments, the first signal is a WUS.

In some embodiments, the second type signal is one or more of the following types: NR signal, LTE wireless signal and WiFi signal, and the second type signal includes one or more of the following signals: a second synchronization signal, a second reference signal, a second preamble signal, and a second beacon signal.

In some embodiments, the second transceiver unit 1201 is further configured to receive first indication information transmitted by the terminal device. The first indication information is used to indicate that the terminal device receives the first signal through a target receiver, and the target receiver includes a main receiver and/or an auxiliary receiver of the terminal device.

In some embodiments, the wireless communication apparatus 1200 further includes a second determination unit configured to determine that the terminal device enters the first state when the first condition is satisfied. The first condition includes one or more of the following.

The first indication information transmitted by the terminal device indicates that the terminal device receives the first signal through the auxiliary receiver.

The second indication information is transmitted to the terminal device, and the second indication information is used to indicate to turn off the main receiver.

A duration between the current time and the time when scheduling information was last transmitted to the terminal device is equal to a first duration.

In some embodiments, the second determination unit is further configured to determine that the target receiver for receiving the first signal in the terminal device is the auxiliary receiver when the terminal device is in the first state.

In some embodiments, the second transceiver unit 1201 is further configured to receive third indication information transmitted by the terminal device when the terminal device is in the first state. The third indication information is used to indicate to exit the first state.

In some embodiments, the network device communicates with the terminal device through the second type signal.

Those skilled in the art should understand that the related description of the above wireless communication apparatus according to the embodiment of the present disclosure can be understood with reference to the related description of the wireless communication method according to the embodiments of the present disclosure.

FIG. 13 is a schematic structural diagram of a communication device 1300 according to an embodiment of the present disclosure. The communication device may be a terminal device or a network device. The communication device 1300 illustrated in FIG. 13 includes a processor 1310, and the processor 1310 may invoke and execute a computer program from a memory to implement the method in the embodiments of the present disclosure.

In an embodiment, as illustrated in FIG. 13, the communication device 1300 may further include a memory 1320. The processor 1310 may invoke and execute a computer program from the memory 1320 to implement the method in the embodiments of the present disclosure.

The memory 1320 may be a separate device independent of the processor 1310 or may be integrated in the processor 1310.

In an embodiment, as illustrated in FIG. 13, the communication device 1300 may further include a transceiver 1330, and the processor 1310 may control the transceiver 1330 to communicate with other devices. Specifically, the processor may control the transceiver to transmit information or data to other devices, or receive information or data transmitted by other devices.

The transceiver 1330 may include a transmitter and a receiver. The transceiver 1330 may further include antennas, and the number of antennas may be one or more.

In an embodiment, the communication device 1300 may specifically be the network device according to the embodiment of the present disclosure, and the communication device 1300 may implement corresponding processes implemented by the network device in various methods of the embodiments of the present disclosure, which will not be described herein for the sake of brevity.

In an embodiment, the communication device 1300 may specifically be a mobile terminal/terminal device according to the embodiment of the present disclosure, and the communication device 1300 may implement corresponding processes implemented by the mobile terminal/terminal device in various methods of the embodiments of the present disclosure, which will not be described herein for the sake of brevity.

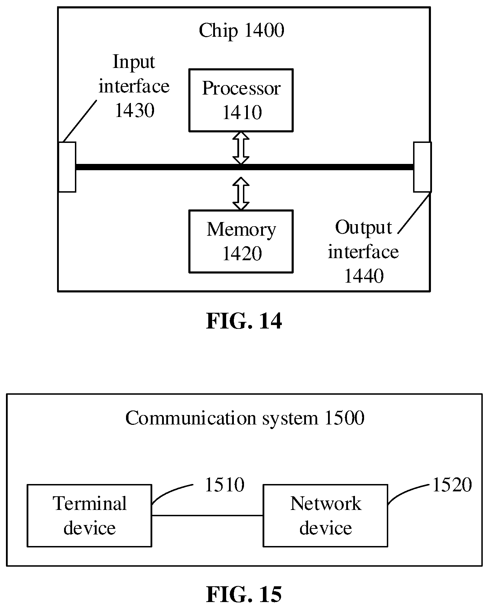

FIG. 14 is a schematic structural diagram of a chip according to an embodiment of the present disclosure. The chip 1400 illustrated in FIG. 14 includes a processor 1410. The processor 1410 may invoke and execute a computer program from a memory to implement the method in the embodiments of the present disclosure.

In an embodiment, as illustrated in FIG. 14, the chip 1400 may further include a memory 1420. The processor 1410 may invoke and execute a computer program from the memory 1420 to implement the method in the embodiments of the present disclosure.

The memory 1420 may be a separate device independent of the processor 1410 or may be integrated in the processor 1410.

In an embodiment, the chip 1400 may further include an input interface 1430. The processor 1410 may control the input interface 1430 to communicate with other devices or chips. Specifically, the processor may control the input interface to acquire information or data transmitted by other devices or chips.

In an embodiment, the chip 1400 may further include an output interface 1440. The processor 1410 may control the output interface 1440 to communicate with other devices or chips. Specifically, the processor may control the output interface to output information or data to other devices or chips.

In an embodiment, the chip can be applied to the network device in the embodiment of the present disclosure, and the chip may implement corresponding processes implemented by the network device in various methods of the embodiments of the present disclosure, which will not be described herein for the sake of brevity.

In an embodiment, the chip can be applied to the mobile terminal/terminal device in the embodiment of the present disclosure, and the chip may implement corresponding processes implemented by the mobile terminal/terminal device in various methods of the embodiments of the present disclosure, which will not be described herein for the sake of brevity.

It should be understood that the chip mentioned in the embodiments of the present disclosure may also be referred to as a system-level chip, a system chip, a chip system, a system-on-chip, or the like.

FIG. 15 is a schematic block diagram of a communication system 1500 according to an embodiment of the present disclosure. As illustrated in FIG. 15, the communication system 1500 includes a terminal device 1510 and a network device 1520.

The terminal device 1510 may be used to implement the corresponding functions implemented by the terminal device in the above method, and the network device 1520 may be used to implement the corresponding functions implemented by the network device in the above method, which will not be described herein for the sake of brevity.

It should be understood that the processor of the embodiments of the present disclosure may be an integrated circuit chip with a signal processing capability. During an implementation process, each operation in the above method embodiments may be completed via an integrated logic circuit of hardware in the processor or an instruction in a software form. The processor may be a universal processor, a Digital Signal Processor (DSP), an Application Specific Integrated Circuit (ASIC) and a Field Programmable Gate Array (FPGA) or other programmable logic devices, discrete gates or transistor logic devices, and discrete hardware component. Each method, operation and logic block diagram disclosed in the embodiments of the present disclosure may be implemented or executed. The universal processor may be a microprocessor or the processor may also be any conventional processor and the like. The operations of the methods disclosed in combination the embodiments of the present disclosure may be directly embodied to be executed and completed by a hardware decoding processor or executed and completed by a combination of hardware and software modules in the decoding processor. The software module may be located in a mature storage medium in the art, such as a Random Access Memory (RAM), a flash memory, a Read-Only Memory (ROM), a Programmable ROM (PROM), an Electrically EPROM (EEPROM) or a register. The storage medium is located in the memory. The processor reads information from the memory and completes the operations of the foregoing methods in combination with the hardware of the processor.

It is to be understood that the memory in the embodiments of the present disclosure may be a volatile memory or a non-volatile memory, or may include both volatile and non-volatile memories. The non-volatile memory may be a ROM, a PROM, an Erasable PROM (EPROM), an Electrically EPROM (EEPROM), or a flash memory. The volatile memory may be a Random Access Memory (RAM) used as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It is to be noted that the memory of the system and method described in the present disclosure is intended to include, but not limited to, memories of these and any other proper types.

It is to be understood that the above memory is exemplarily but unlimitedly described. For example, the memory in the embodiments of the present disclosure may also be an SRAM, a DRAM, an SDRAM, a DDR SDRAM, an ESDRAM, an SLDRAM, a DR RAM, and the like. That is, the memory in the embodiments of the present disclosure is intended to include but not limited to memories of these and any other proper types.

The embodiments of the present disclosure also provide a computer-readable storage medium for storing a computer program.

In an embodiment, the computer-readable storage medium may be applied to the network device in the embodiments of the present disclosure, and the computer program enables a computer to execute the corresponding processes implemented by the network device in various methods of the embodiments of the present disclosure. For the sake of brevity, it will not be elaborated herein.

In an embodiment, the computer-readable storage medium may be applied to the mobile terminal/terminal device in the embodiments of the present disclosure, and the computer program enables a computer to execute the corresponding processes implemented by the mobile terminal/terminal device in various methods of the embodiments of the present disclosure. For the sake of brevity, it will not be elaborated here.

The embodiments of the present disclosure also provide a computer program product, including a computer program instruction.

In an embodiment, the computer program product may be applied to the network device in the embodiments of the present disclosure, and the computer program instruction enables a computer to execute the corresponding processes implemented by the network device in various methods of the embodiments of the present disclosure. For the sake of brevity, it will not be elaborated here.

In an embodiment, the computer program product may be applied to the mobile terminal/terminal device in the embodiments of the present disclosure, and the computer program instruction enables a computer to execute the corresponding processes implemented by the mobile terminal/terminal device in various methods of the embodiments of the present disclosure. For the sake of brevity, it will not be elaborated here.

The embodiments of the present disclosure also provide a computer program.

In an embodiment, the computer program may be applied to the network device in the embodiments of the present disclosure, and the computer program, when run on a computer, enables the computer to execute the corresponding processes implemented by the network device in various methods of the embodiments of the present disclosure. For the sake of brevity, it will not be elaborated here.

In an embodiment, the computer program may be applied to the mobile terminal/terminal device in the embodiments of the present disclosure, and the computer program, when run on a computer, enables the computer to execute the corresponding processes implemented by the mobile terminal/terminal device in various methods of the embodiments of the disclosure. For the sake of brevity, it will not be elaborated here.

Those of ordinary skill in the art may realize that the units and algorithm operations of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the present disclosure.

Those skilled in the art may clearly learn about that specific working processes of the system, apparatus and unit described above may refer to the corresponding processes in the method embodiments and will not be elaborated herein for convenient and brief description.

In some embodiments provided by the present disclosure, it is to be understood that the disclosed system, apparatus and method may be implemented in another manner. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the present disclosure may be integrated into a processing unit, each unit may also physically exist independently, and two or more than two units may also be integrated into a unit.

When being realized in form of software functional unit and sold or used as an independent product, the function may be stored in a computer-readable storage medium. Based on such an understanding, the technical solutions of the present disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method in each embodiment of the present disclosure. The abovementioned storage medium includes: various media capable of storing program codes such as a U disk, a mobile hard disk, a ROM, a RAM, a magnetic disk or an optical disk.

The above is only the specific implementation of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

**Claims**

1. A wireless communication method, applicable to a terminal device comprising a main receiver and an auxiliary receiver, the method comprising:
   determining a target receiver for receiving a first signal, wherein the target receiver comprises the main receiver, and/or the auxiliary receiver, the first signal belongs to a first type signal, and the first type signal is a signal received by the auxiliary receiver based on at least one of the following modes: envelope detection, amplitude detection, frequency detection, or phase detection.

2. The method of claim 1, wherein the target receiver is determined based on at least one measurement parameter of the first type signal and/or at least one measurement parameter of a second type signal, the first type signal is received by the main receiver and/or the auxiliary receiver, and the second type signal is received by the main receiver.

3. The method of claim 2, wherein the at least one measurement parameter of the first type signal comprises one or more of:

   a first measurement parameter obtained based on measurement of the first type signal by the main receiver of the terminal device; and
   a second measurement parameter obtained based on measurement of the first type signal by the auxiliary receiver of the terminal device.

4. The method of claim 2 or 3, wherein the at least one measurement parameter of the second type signal comprises a third measurement parameter obtained based on measurement of the second type signal by the main receiver of the terminal device.

5. The method of any one of claims 1 to 4, wherein the first type signal further comprises one or more of:
   a first synchronization signal, a first reference signal, a first preamble signal, and a first beacon signal.

6. The method of any one of claims 1 to 5, wherein the first signal is the first type signal carrying control information and/or data information.

7. The method of any one of claims 1 to 6, wherein the first type signal is a wake up radio, WUR, signal.

8. The method of any one of claims 1 to 7, wherein the first signal is a wake up signal, WUS.

9. The method of any one of claims 2 to 8, wherein the second type signal is one or more of the following: a New Radio, NR, signal, a Long Term Evolution, LTE, wireless signal and a Wireless Fidelity, WiFi, signal, and the second type signal comprises one or more of:
   a second synchronization signal, a second reference signal, a second preamble signal, and a second beacon signal.

10. The method of any one of claims 2 to 9, wherein:

    the target receiver is the auxiliary receiver when the at least one measurement parameter of the first type signal is greater than or equal to a first threshold, and/or the at least one measurement parameter of the second type signal is greater than or equal to a second threshold; and
    the target receiver is the main receiver, or the target receiver is the main receiver and the auxiliary receiver when the at least one measurement parameter of the first type signal is less than the first threshold, and/or the at least one measurement parameter of the second type signal is less than the second threshold.

11. The method of any one of claims 2 to 9, wherein the target receiver is determined by the terminal device based on a plurality of measurement parameters of the first type signal, and/or based on a plurality of measurement parameters of the second type signal.

12. The method of claim 11, wherein:

    when a number of measurement parameters of the first type signal greater than or equal to a first threshold in a first time period is greater than or equal to a first number, and/or a number of measurement parameters of the second type signal greater than or equal to a second threshold in a second time period is greater than or equal to a second number, the target receiver is the auxiliary receiver; and
    when the number of the measurement parameters of the first type signal greater than or equal to the first threshold in the first time period is less than the first number, and/or the number of measurement parameters of the second type signal greater than or equal to the second threshold in the second time period is less than the second number, the target receiver is the main receiver, or the target receiver is the main receiver and the auxiliary receiver.

13. The method of any one of claims 1 to 12, wherein determining the target receiver for receiving the first signal comprises:
    determining, by the terminal device before entering a first state, the target receiver for receiving the first signal, wherein the first state is a state in which a network device transmits the first signal to the terminal device.

14. The method of claim 13, further comprising:
transmitting, by the terminal device, first indication information to the network device, the first indication information indicating the target receiver.

15. The method of claim 13 or 14, wherein the terminal device turns off the main receiver if the terminal device determines that the target receiver for receiving the first signal is the auxiliary receiver.

16. The method of any one of claims 13 to 15, further comprising:
receiving, by the terminal device, the first signal through the target receiver when the terminal device is in the first state.

17. The method of any one of claims 13 to 16, further comprising:
entering, by the terminal device, the first state when a first condition is satisfied, the first condition comprising one or more of:

first indication information transmitted by the terminal device to the network device indicating that the target receiver is the auxiliary receiver;
the terminal device receiving second indication information sent by the network device, and the second indication information indicating to turn off the main receiver; and
a duration between a current time and a time when scheduling information was last received being equal to a first duration.

18. The method of any one of claims 1 to 17, wherein determining the target receiver for receiving the first signal comprises:
determining, by the terminal device, the target receiver for receiving the first signal when the terminal device is in a first state, wherein the first state is a state in which a network device transmits the first signal to the terminal device.

19. The method of any one of claims 1 to 18, further comprising:
when the terminal device is in a first state and the terminal device determines that at least one measurement parameter of the first signal is less than a third threshold, transmitting, by the terminal device, third indication information to the network device through the main receiver, the third indication information indicating that the terminal device exits the first state, wherein the third threshold is less than a first threshold and/or a second threshold.

20. A wireless communication method, applicable to a network device, the method comprising:
transmitting a first signal to a terminal device when the terminal device enters a first state, wherein the first signal belongs to a first type signal, and the first type signal is a signal received by an auxiliary receiver based on at least one of the following modes: envelope detection, amplitude detection, frequency detection, or phase detection.

21. The method of claim 20, further comprising:
transmitting, by the network device, a first type signal and/or a second type signal, the first type signal and/or the second type signal being configured for the terminal device to determine a target receiver for receiving the first signal, and the target receiver comprising the auxiliary receiver, and/or a main receiver of the terminal device.

22. The method of claim 20 or 21, wherein the first type signal further comprises one or more of a wake up radio, WUR, signal:
a first synchronization signal, a first reference signal, a first preamble signal, and a first beacon signal.

23. The method of any one of claims 20 to 22, wherein the first signal is the first type signal carrying control information and/or data information.

24. The method of any one of claims 20 to 23, wherein the first type signal is a wake up radio, WUR, signal.

25. The method of any one of claims 20 to 24, wherein the first signal is a wake up signal, WUS.

26. The method of any one of claims 20 to 25, wherein the second type signal is one or more of the following: a New Radio, NR, signal, a Long Term Evolution, LTE, wireless signal and a Wireless Fidelity, WiFi, signal, and the second type signal comprises one or more of:
a second synchronization signal, a second reference signal, a second preamble signal, and a second beacon signal.

27. The method of any one of claims 20 to 26, further comprising:
receiving first indication information transmitted by the terminal device, the first indication information indicating that the terminal device receives the first signal through a target receiver, and the target receiver comprising the auxiliary receiver and/or a main receiver of the terminal device.

28. The method of any one of claims 20 to 27, further comprising:
determining that the terminal device enters the first state if a first condition is satisfied, the first condition comprising one or more of:

first indication information transmitted by the terminal device indicating that the terminal device receives the first signal through the auxiliary receiver;
second indication information being transmitted to the terminal device, and the second indication information indicating to turn off a main receiver; and
a duration between a current time and a time when scheduling information was last transmitted to the terminal device being equal to a first duration.

29. The method of any one of claims 20 to 28, further comprising:
determining that a target receiver for receiving the first signal in the terminal device is the auxiliary receiver when the terminal device is in the first state.

30. The method of any one of claims 20 to 29, further comprising:
receiving third indication information transmitted by the terminal device when the terminal device is in the first state, the third indication information indicating that the terminal device exits the first state.

31. The method of claim 30, further comprising:
communicating, by the network device, with the terminal device through a second type signal.

32. A wireless communication apparatus, applicable to a terminal device comprising a main receiver and an auxiliary receiver, the apparatus comprising:
a first determination unit, configured to determine a target receiver for receiving a first signal, wherein the target receiver comprises the main receiver, and/or the auxiliary receiver, the first signal belongs to a first type signal, and the first type signal is a signal received by the auxiliary receiver based on at least one of the following modes: envelope detection, amplitude detection, frequency detection, or phase detection.

33. A wireless communication apparatus, applicable to a network device, the apparatus comprising:
a second transceiver unit, configured to transmit a first signal to a terminal device when the terminal device enters a first state, wherein the first signal belongs to a first type signal, and the first type signal is a signal received by an auxiliary receiver based on at least one of the following modes: envelope detection, amplitude detection, frequency detection, or phase detection.

34. A terminal device, comprising a processor and a memory for storing a computer program, wherein the processor is configured for invoking and executing the computer program stored in the memory to perform the method of any one of claims 1 to 19.

35. A network device, comprising a processor and a memory for storing a computer program, wherein the processor is configured for invoking and executing the computer program stored in the memory to perform the method of any one of claims 21 to 31.

36. A chip, comprising: a processor, configured for invoking and executing a computer program from a memory to enable a device installed with the chip to perform the method of any one of claims 1 to 19, or to enable a device installed with the chip to perform the method of any one of claims 20 to 31.

37. A computer storage medium, configured for storing a computer program that causes a terminal device to perform the method of any one of claims 1 to 19, or causes a network device to perform the method of any one of claims 20 to 31.

38. A computer program product, comprising computer program instructions that cause a terminal device to perform the method of any one of claims 1 to 19, or cause a network device to perform the method of any one of claims 20 to 31.

**39.** A computer program, enabling a terminal device to perform the method of any one of claims 1 to 19, or enabling a network device to perform the method of any one of claims 20 to 31.

**FIG. 1**

**FIG. 2**

**FIG. 3**

Region A

Q

Region B

I

a

**FIG. 4**

Main receiver

Indication
information

Auxiliary
receiver

**FIG. 5**

A terminal device determines a target receiver for receiving a first signal, and the target receiver includes a main receiver and/or an auxiliary receiver; the first signal belongs to a first type signal, and the first type signal is a signal received by the auxiliary receiver based on at least one of the following modes: envelope detection, amplitude detection, frequency detection, or phase detection

610

**FIG. 6**

Assigned to transmission of the second type signal

Assigned to transmission of the first type signal

Assigned to transmission of the second type signal

IFFT

Parallel-serial conversion

DAC

Radio frequency front-end

**FIG. 7**

First condition

Second condition

| Non-first state | First state | Non-first state |

**FIG. 8**

| First state | | | |
|---|---|---|---|
| Main receiver turns on | Auxiliary receiver turns on | | Main receiver turns on |

▨ First type signal

**FIG. 9**

A first signal is transmitted to a terminal device when the terminal device enters a first state, the first signal belongs to a first type signal, and the first type signal is a signal received by an auxiliary receiver based on at least one of the following modes: envelope detection, amplitude detection, frequency detection or phase detection — 1010

**FIG. 10**

Wireless communication apparatus

1101

First determination unit

**FIG. 11**

Wireless communication apparatus

1201

Second transceiver unit

**FIG. 12**

Communication device 1300

Memory
1320

Processor
1310

Transceiver
1330

**FIG. 13**

Chip 1400

Input
interface
1430

Processor
1410

Memory
1420

Output
interface
1440

**FIG. 14**

Communication system 1500

1510

Terminal
device

Network
device

1520

**FIG. 15**

## INTERNATIONAL SEARCH REPORT

| International application No. |
|---|
| **PCT/CN2022/135995** |

**A.    CLASSIFICATION OF SUBJECT MATTER**

H04B 7/04(2017.01)i

According to International Patent Classification (IPC) or to both national classification and IPC

**B.    FIELDS SEARCHED**

Minimum documentation searched (classification system followed by classification symbols)

IPC:H04B 7/-; H04Q 7/-; H04W 4/-; H04W 52/-; H04L 5/-

Documentation searched other than minimum documentation to the extent that such documents are included in the fields searched

Electronic data base consulted during the international search (name of data base and, where practicable, search terms used)

CNABS, CNTXT, ENTXTC, CNKI, 百度, BAIDU: 主, 辅, 附加, 低功率, 接收机, 接收器, 唤醒, 覆盖, 信号质量, 信号强度; VEN, ENTXT, 3GPP: main, auxiliary, additional, low power, receiver, wake-up, coverage, quality, RSSI, RSRP

**C.    DOCUMENTS CONSIDERED TO BE RELEVANT**

| Category* | Citation of document, with indication, where appropriate, of the relevant passages | Relevant to claim No. |
|---|---|---|
| X | CN 107079403 A (QUALCOMM INC.) 18 August 2017 (2017-08-18) description, paragraphs [0050]-[0099] | 1-39 |
| A | CN 101296434 A (ZTE CORP.) 29 October 2008 (2008-10-29) entire document | 1-39 |
| A | CN 102088663 A (THE RESEARCH INSTITUTE OF TELECOMMUNICATIONS TRANSMISSION, MIIT) 08 June 2011 (2011-06-08) entire document | 1-39 |
| A | CN 103414507 A (BEIJING XIAOMI TECHNOLOGY CO., LTD.) 27 November 2013 (2013-11-27) entire document | 1-39 |
| A | US 2014105136 A1 (HEADWATER PARTNERS II L.L.C.) 17 April 2014 (2014-04-17) entire document | 1-39 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 August 2023** | **29 August 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/135995**

| Patent document cited in search report | | | Publication date (day/month/year) | Patent family member(s) | | | Publication date (day/month/year) |
|---|---|---|---|---|---|---|---|
| CN | 107079403 | A | 18 August 2017 | US | 2016150474 | A1 | 26 May 2016 |
| | | | | US | 9763189 | B2 | 12 September 2017 |
| | | | | JP | 2018502484 | A | 25 January 2018 |
| | | | | JP | 6301016 | B2 | 28 March 2018 |
| | | | | EP | 3222090 | A1 | 27 September 2017 |
| | | | | EP | 3222090 | B1 | 28 August 2019 |
| | | | | WO | 2016081282 | A1 | 26 May 2016 |
| | | | | KR | 20170085514 | A | 24 July 2017 |
| | | | | KR | 101873178 | B1 | 29 June 2018 |
| | | | | CN | 107079403 | B | 18 June 2019 |
| | | | | IN | 201747012410 | A | 21 April 2017 |
| CN | 101296434 | A | 29 October 2008 | CN | 101296434 | B | 09 May 2012 |
| CN | 102088663 | A | 08 June 2011 | CN | 102088663 | B | 04 September 2013 |
| CN | 103414507 | A | 27 November 2013 | | None | | |
| US | 2014105136 | A1 | 17 April 2014 | US | 9350515 | B2 | 24 May 2016 |

Form PCT/ISA/210 (patent family annex) (July 2022)